# EUROPEAN PATENT APPLICATION

(11) **EP 4 507 054 A1**
(43) Date of publication of application: **12.02.2025**
(21) Application number: 22962306.1
(22) Date of filing: 17.10.2022
(51) Int. Cl.: H01M 10/0567

(54) **SECONDARY BATTERY AND ELECTRIC DEVICE COMPRISING SAME**

(71) Applicant: Contemporary Amperex Technology (Hong Kong) Limited, Central, Central And Western District (HK)
(72) Inventor: WU, Zeli, Ningde, Fujian 352100 (CN); GUO, Jie, Ningde, Fujian 352100 (CN); HAN, Changlong, Ningde, Fujian 352100 (CN); HUANG, Lei, Ningde, Fujian 352100 (CN); JIANG, Bin, Ningde, Fujian 352100 (CN); HUANG, Junyuan, Ningde, Fujian 352100 (CN); LIU, Wenhao, Ningde, Fujian 352100 (CN)
(74) Representative: Ziebig Hengelhaupt Intellectual Property Attorneys Patentanwaltskanzlei PartGmbB
(86) International application number: PCT/CN2022/125781
(87) International publication number: WO 2024/082110

(57) **Abstract**

This application provides a secondary battery and an electric apparatus containing the same. The secondary battery includes a positive electrode plate, a negative electrode plate, and an electrolyte. Porosity of the positive electrode plate is A, porosity of the negative electrode plate is B, and the electrolyte includes a first component. The first component includes one or more compounds represented by formula 1, and a weight percentage of the first component in the electrolyte is D1. The secondary battery satisfies 0.80 ≤ A/B ≤ 1.20 and 0.14 ≤ 100D1/B ≤ 1.50. The secondary battery of this application can achieve a balance among high energy density, good cycling performance, and good power performance.

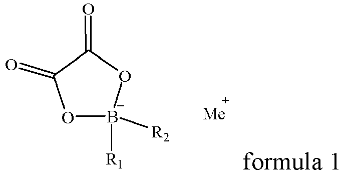

## Description

### TECHNICAL FIELD

This application relates to the technical field of batteries, and specifically, to a secondary battery and an electric apparatus containing the same.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the application and popularization of secondary batteries, comprehensive performance of secondary batteries has received increasing attention. For example, secondary batteries need to have high energy density, long cycle life, good power performance, and the like. Therefore, how a secondary battery with good comprehensive performance is provided is a technical problem that needs to be urgently solved.

### SUMMARY

This application is intended to provide a secondary battery and an electric apparatus containing the same so that the secondary battery can achieve a balance among high energy density, good cycling performance, and good power performance.

A first aspect of this application provides a secondary battery including a positive electrode plate, a negative electrode plate, and an electrolyte, where porosity of the positive electrode plate is A, porosity of the negative electrode plate is B, and the electrolyte includes a first component, where the first component includes one or more compounds represented by formula 1, R₁ and R₂ each independently representfluorine atom or at least one from a group consisting of the following partially or fully fluorinated groups: C1-C10 alkyl group, C2-C10 alkenyl group, C2-C10 alkynyl group, C6-C8 aryl group, C1-C10 alkoxy group, C2-C10 alkenyloxy group, C2-C10 alkynyloxy group, and C6-C8 aryloxy group, Me includes one or more of alkali metals and alkaline earth metals, and a weight percentage of the first component in the electrolyte is D1, 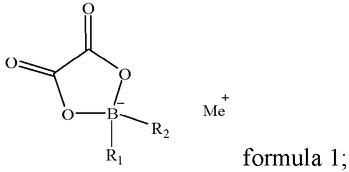 and
the secondary battery satisfies 0.80 ≤ A/B ≤ 1.20 and 0.14 ≤ 100D1/B ≤ 1.50.

The inventors of this application have found in research that when the porosity A of the positive electrode plate, the porosity B of the negative electrode plate, and the percentage D1 of the first component in the electrolyte are adjusted to satisfy 0.80 ≤ A/B ≤ 1.20 and 0.14 ≤ 100D1/B ≤ 1.50, ion deintercalation/intercalation at the positive electrode well matches the intercalation/deintercalation at the negative electrode. This can ensure that the positive electrode plate and the negative electrode plate are evenly infiltrated by the compound represented by formula 1 to the maximum extent and that the compound represented by formula 1 effectively participates in film formation on the surface of the negative electrode and the surface of the positive electrode to form a low-impedance interface film. In this case, both the polarization and internal resistance of the battery are small, and the capacity attenuation speed and amount of heat generated during charge and discharge of the battery are reduced, so that the secondary battery has good power performance and long cycle life while having high energy density, and in addition, the secondary battery can have good low-temperature discharge performance.

In any embodiment of this application, 0.85 ≤ A/B ≤ 1.15, optionally 0.90 ≤ A/B ≤ 1.15. This helps to further improve matching between the positive electrode plate and the negative electrode plate, helps to form a low-impedance interface film on both the surface of the positive electrode and the surface of the negative electrode, and helps to reduce the polarization and internal resistance of the battery.

In any embodiment of this application, 0.16 ≤ 100D1/B ≤ 1.40, optionally 0.20 ≤ 100D1/B ≤ 1.20. This can ensure that the compound represented by formula 1 effectively participates in film formation on the surface of the negative electrode and the surface of the positive electrode to form an interface film of lower impedance, thereby allowing the secondary battery to achieve a better balance among high energy density, good power performance, and good low-temperature discharge performance.

In any embodiment of this application, the secondary battery further satisfies 0.16 ≤ 100D1/A ≤ 1.20, optionally 0.20 ≤ 100D1/A ≤ 1.10. When the secondary battery further satisfies the above parameter range, it can better ensure that the compound represented by formula 1 effectively participates in film formation on the surface of the positive electrode, further improving the film formation quality and forming an interface film of lower impedance, thereby allowing the secondary battery to achieve a better balance between high energy density and good power performance. Additionally, the secondary battery can also have long cycle life.

In any embodiment of this application, 18% ≤ A ≤ 32%.

In any embodiment of this application, 20% ≤ B ≤ 35%.

The porosity A of the positive electrode plate and/or the porosity B of the negative electrode plate further satisfying the above specified range helps to ensure that the positive electrode plate and/or the negative electrode plate also has the optimal electronic transport network and the optimal ion conduction pathway, thereby further improving the electrochemical performance of the secondary battery.

In any embodiment of this application, 0.05% ≤ D1 ≤ 0.3%. The percentage D1 of the first component in the electrolyte falling within the proper range helps to form a low-impedance interface film on both the surface of the positive electrode and the surface of the negative electrode, thereby allowing the secondary battery to have good power performance and long cycle life.

In any embodiment of this application, compacted density of the positive electrode plate is P₁ g/cm³, compacted density of the negative electrode plate is P₂ g/cm³, and the secondary battery further satisfies the following relation: 1.75 ≤ P₁/P₂ ≤ 2.50, optionally 2.00 ≤ P₁/P₂ ≤ 2.40. Adjusting the ratio of the compacted density of the positive electrode plate to the compacted density of the negative electrode plate to fall within the above range helps to form a low-impedance interface film on both the surface of the positive electrode and the surface of the negative electrode, and helps to ensure that the positive electrode plate and the negative electrode plate have the optimal electronic transport network and the optimal ion conduction pathway, thereby further improving the electrochemical performance of the secondary battery.

In any embodiment of this application, compacted density of the positive electrode plate is P₁ g/cm³ and the secondary battery further satisfies the following relation: 1.43 ≤ 10000D1/P₁ ≤ 9.34, optionally 2.00 ≤ 10000D1/P₁ ≤ 8.00. In this case, it can ensure that the compound represented by formula 1 effectively participates in film formation on the surface of the positive electrode, further improving the film formation quality and forming an interface film of lower impedance. Additionally, this helps to avoid a decrease in power performance of the secondary battery caused by excessively high or low compacted density of the positive electrode plate.

In any embodiment of this application, compacted density of the negative electrode plate is P₂ g/cm³ and the secondary battery further satisfies the following relation: 2.78 ≤ 10000D1/P₂ ≤ 21.40, optionally 5.00 ≤ 10000D1/P₂ ≤ 15.00. In this case, it can ensure that the compound represented by formula 1 effectively participates in film formation on the surface of the negative electrode, further improving the film formation quality and forming an interface film of lower impedance. Additionally, this helps to avoid a decrease in power performance and/or low-temperature discharge performance of the secondary battery caused by excessively high or low compacted density of the negative electrode plate.

In any embodiment of this application, 2.8 ≤ P₁ ≤ 3.65, optionally 3.2 ≤ P₁ ≤ 3.5.

In any embodiment of this application, 1.2 ≤ P₂ ≤ 1.85, optionally 1.4 ≤ P₂ ≤ 1.8.

The compacted density P₁ of the positive electrode plate and/or the compacted density P₂ of the negative electrode plate further satisfying the above specified range helps to ensure that the positive electrode plate and/or the negative electrode plate has the proper porosity and optimal electronic transport network and the optimal ion conduction pathway, thereby further improving the electrochemical performance of the secondary battery.

In any embodiment of this application, Me represents Li.

In any embodiment of this application, the compound represented by formula 1 includes one or more of the following compounds:

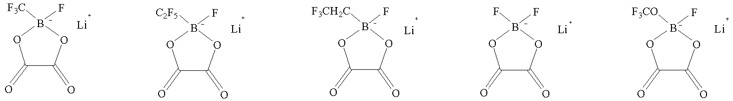

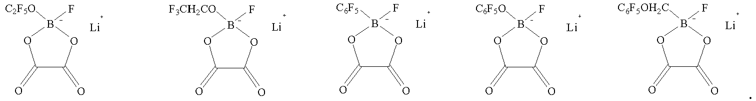

In any embodiment of this application, the electrolyte further includes a second component, and the second component includes lithium hexafluorophosphate.

In any embodiment of this application, a weight percentage D2 of the second component in the electrolyte is 5% or more, optionally 8% or more.

Lithium hexafluorophosphate features high ionic conductivity. Therefore, its percentage falling within a proper range helps to improve the overall ionic conductivity of the electrolyte, accelerate ion transport, and enhance the capacity performance of the secondary battery.

In any embodiment of this application, the electrolyte further includes a third component, and the third component includes one or more of lithium tetrafluoroborate, lithium difluorophosphate, lithium perchlorate, lithium hexafluoroarsenate, lithium difluorobis(oxalato)phosphate, and lithium tetrafluoro oxalato phosphate and optionally includes lithium tetrafluoroborate, lithium difluorophosphate, or a combination thereof.

In any embodiment of this application, a weight percentage D3 of the third component in the electrolyte is 0.5% or less, optionally 0.25% or less.

The third component can serve as an auxiliary lithium salt to further improve the properties of interfaces at the positive electrode and/or negative electrode or improve the ionic conductivity or thermal stability of the electrolyte.

In any embodiment of this application, a weight ratio D3/D1 of the third component to the first component is 0.5 to 2. This helps to fully exert the synergistic effect between the third component and the first component and also contributes to good low-temperature discharge performance of the secondary battery.

In any embodiment of this application, the electrolyte further includes a fourth component, and the fourth component includes fluoroethylene carbonate.

In any embodiment of this application, a weight percentage D4 of the fourth component in the electrolyte is 5% or less, optionally 2.5% or less.

When the electrolyte contains fluoroethylene carbonate, the cycling performance of the secondary battery can be effectively improved.

In any embodiment of this application, a weight ratio D4/D1 of the fourth component to the first component is 5 to 100. The weight ratio of the fourth component to the first component falling within a proper range can fully utilize the synergistic effect between the fourth component and the first component, thereby further improving the cycling performance of the secondary battery without significantly increasing the gas production of the secondary battery.

In any embodiment of this application, the electrolyte further includes a fifth component, the fifth component includes one or more of cyclic carbonate compound, linear carbonate compound, carboxylate compound, sulfone compound, and ether compound and optionally includes a cyclic carbonate compound and a linear carbonate compound.

In any embodiment of this application, a weight percentage D5 of the fifth component in the electrolyte is 60% or more, optionally 75% or more.

In any embodiment of this application, the positive electrode plate includes a positive electrode current collector and a positive electrode film layer disposed on at least one surface of the positive electrode current collector and including a positive electrode active material; and optionally, the positive electrode active material includes one or more of layered lithium transition metal oxide, lithium-containing phosphate, and their respective modified compounds, and optionally includes one or more of layered lithium transition metal oxide and modified compound thereof or includes a mixture of layered lithium transition metal oxide and modified compound thereof and lithium-containing phosphate and modified compound thereof.

In any embodiment of this application, morphology of the positive electrode active material includes one or more of sphere and quasi-sphere.

In any embodiment of this application, the positive electrode active material includes primary particles, secondary particles, or a combination thereof and optionally includes secondary particles or a combination of primary particles and secondary particles.

In any embodiment of this application, a number percentage of the secondary particles in the positive electrode active material is 50% or more.

In any embodiment of this application, volume-based median particle size of the positive electrode active material satisfies 2.5 µm ≤ Dᵥ50 ≤ 30 µm, optionally 2.5 µm ≤ Dᵥ50 ≤ 25 µm.

In any embodiment of this application, span of the positive electrode active material satisfies 1 ≤ (Dᵥ90 - Dᵥ10)/Dᵥ50 ≤ 5, optionally 1 ≤ (Dᵥ90 - Dᵥ10)/Dᵥ50 ≤ 2.

Adjusting one or more parameters of the morphology, volume-based median particle size Dᵥ50, and span (Dᵥ90 - Dᵥ10)/Dᵥ50 of the particles of the positive electrode active material to satisfy the above range contributes to the proper porosity and/or compacted density of the positive electrode plate and also helps the secondary battery to achieve a better balance among high energy density, high power density, and high capacity performance.

In any embodiment of this application, the negative electrode plate includes a negative electrode current collector and a negative electrode film layer disposed on at least one surface of the negative electrode current collector and including a negative electrode active material; and optionally, the negative electrode active material includes one or more of carbon-based material, silicon-based material, tin-based material, lithium titanate, and composite material obtained by coating and modifying these materials and more optionally includes one or more of carbon-based material and composite material obtained by coating and modifying this material. Optionally, the carbon-based material includes one or more of graphite, soft carbon, hard carbon, and composite material obtained by coating and modifying these materials.

In any embodiment of this application, morphology of the negative electrode active material includes one or more of sphere, quasi-sphere, block, and sheet.

In any embodiment of this application, the negative electrode active material includes primary particles, secondary particles, or a combination thereof and optionally includes secondary particles or a combination of primary particles and secondary particles.

In any embodiment of this application, a number percentage of the secondary particles in the negative electrode active material is 50% or more.

In any embodiment of this application, volume-based median particle size of the negative electrode active material satisfies 8 µm ≤ Dᵥ50 ≤ 22 µm, optionally 10 µm ≤ Dᵥ50 ≤ 16 µm.

In any embodiment of this application, span of the negative electrode active material satisfies 0.5 ≤ (Dᵥ90 - Dᵥ10)/Dᵥ50 ≤ 5, optionally 0.5 ≤ (Dᵥ90 - Dᵥ10)/Dᵥ50 ≤ 1.5.

Adjusting one or more parameters of the morphology, volume-based median particle size Dᵥ50, and span (Dᵥ90 - Dᵥ10)/Dᵥ50 of the particles of the negative electrode active material to satisfy the above range contributes to the proper porosity and/or compacted density of the negative electrode plate and also helps the secondary battery to achieve a better balance among high energy density, high power density, and high capacity performance.

A second aspect of this application provides an electric apparatus including the secondary battery in the first aspect of this application.

The inventors of this application have found in research that when the porosity A of the positive electrode plate, the porosity B of the negative electrode plate, and the percentage D1 of the first component in the electrolyte are adjusted to satisfy 0.80 ≤ A/B ≤ 1.20 and 0.14 ≤ 100D1/B ≤ 1.50, the secondary battery has good power performance and long cycle life while having high energy density, and in addition, the secondary battery can have good low-temperature discharge performance. The electric apparatus of this application includes the secondary battery provided in this application and therefore has at least the same advantages as the secondary battery.

### BRIEF DESCRIPTION OF DRAWINGS

To describe the technical solutions of the embodiments of this application more clearly, the following briefly describes the accompanying drawings for describing the embodiments of this application. Apparently, the accompanying drawings in the following descriptions show only some embodiments of this application, and persons of ordinary skill in the art may still derive other drawings from these accompanying drawings without creative efforts.
FIG. 1 is a schematic diagram of an embodiment of a battery cell in this application.
FIG. 2 is a schematic exploded view of an embodiment of a battery cell in this application.
FIG. 3 is a schematic diagram of an embodiment of a battery module in this application.
FIG. 4 is a schematic diagram of an embodiment of a battery pack in this application.
FIG. 5 is a schematic exploded view of the embodiment of the battery pack in FIG. 4.
FIG. 6 is a schematic diagram of an embodiment of an electric apparatus using the secondary battery in this application as a power source.

In the accompanying drawings, the figures are not necessarily drawn to scale. Reference signs are as follows: 1. battery pack, 2. upper box body, 3. lower box body, 4. battery module, 5. battery cell, 51. housing, 52. electrode assembly, and 53. cover plate.

### DESCRIPTION OF EMBODIMENTS

The following specifically discloses in detail embodiments of the secondary battery and electric apparatus containing the same of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Throughout this specification, the substituents of compounds are disclosed in groups or ranges. It is explicitly anticipated that this description indicates every individual subcombination of members of these groups and ranges. For example, it is explicitly anticipated that the term "C1-C6 alkyl group" separately discloses C1, C2, C3, C4, C5, C6, C1-C6, C1-C5, C1-C4, C1-C3, C1-C2, C2-C6, C2-C5, C2-C4, C2-C3, C3-C6, C3-C5, C3-C4, C4-C6, C4-C5, and C5-C6 alkyl groups.

In this application, the term "a plurality of" means two or more than two and the term "a plurality of types" means two types or more than two types.

In this application, the porosity of the electrode plate has the meaning commonly known in the art, which refers to the percentage of the internal pore volume of the electrode plate rolled in the total volume of the electrode plate rolled, and can be tested using a method known in the art. For example, it can be tested in accordance with GB/T 24586-2009. The test instrument can be an AccuPyc II 1340 automatic true density tester from Micromeritics of the United States. An example test method may include the following steps: punching a sufficiently dried electrode plate into small discs of a specific diameter (for example, 14 mm) using a punching machine, where the small discs need to have intact edges without powder falling; and using an inert gas (for example, helium) with a small molecular diameter for displacement to precisely measure the true volume V1 of the electrode plate sample under test according to the Archimedes principle and Boyle's law. The porosity of the electrode plate is equal to [(V2 - V1)/V2] × 100%, where V2 is the apparent volume of the electrode plate, and V2 is equal to S × H × A, S representing the area of the electrode plate sample, H representing the thickness of the electrode plate sample, and A representing the number of electrode plate samples.

In this application, the compacted density of the electrode plate has a meaning commonly known in the art, and can be tested in a method known in the art. Compacted density of electrode plate = surface density of electrode plate/thickness of electrode film layer. The surface density of the electrode plate has a meaning commonly known in the art, and can be measured by using a method known in the art. For example, a single-sided coated and cold-pressed electrode plate (for a double-sided coated electrode plate, an electrode film layer on one side can be wiped off first) is punched into a small disc with an area of S₀, and then weighed, and an obtained weight is recorded as M₁. Then, the electrode film layer of the electrode plate weighed is wiped off to weigh the weight of the current collector, and an obtained weight is recorded as M₀. The surface density of the electrode plate is equal to (M₁ - M₀)/S₀. The thickness of the electrode film layer has a meaning commonly known in the art, and can be tested by using a method known in the art. For example, it can be determined using a spiral micrometer.

In this application, the volume-based particle sizes Dᵥ90, Dᵥ50, and Dᵥ10 of the electrode active material has the meanings commonly known in the art, which are the particle sizes of the material corresponding to cumulative volume distribution percentages reaching 90%, 50%, and 10% respectively and can be determined using an instrument and method commonly known in the art. For example, they can be determined using a laser particle size analyzer in accordance with GB/T 19077-2016. The test instrument may be a laser particle size analyzer of Mastersizer 2000E from Malvern Instruments Limited of the United Kingdom.

In this application, the relevant parameters (for example, surface density, compacted density, and porosity) of the electrode plate may be tested by sampling a secondary battery under preparation or sampling a secondary battery prepared. An example method for sampling a secondary battery prepared may include the following steps: leaving the secondary battery standing at 25°C for 30 minutes, and discharging it at a constant current of 0.33C to a discharge cutoff voltage; and after another 30 minutes of standing, disassembling the secondary battery to take the electrode plate, soaking the electrode plate in a solvent for a certain period of time (for example, soaking it in dimethyl carbonate for 20 h), and thoroughly drying the electrode plate in a drying room (for example, for more than 2 h) to obtain a test sample.

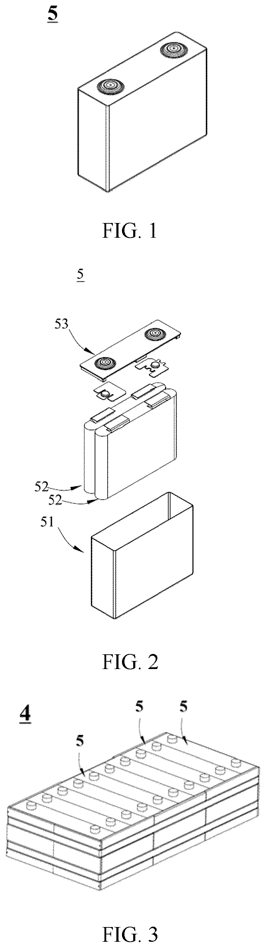

The secondary battery mentioned in the embodiments or implementations of this application is a single physical module that includes one or more battery cells for providing a higher voltage and capacity. For example, the secondary battery mentioned in this application may include a battery cell, a battery module, a battery pack, or the like. A battery cell is the smallest unit that constitutes a secondary battery and can be independently charged and discharged. This application does not impose special limitations on the shape of the battery cell, and the battery cell may be cylindrical, rectangular, or of any other shapes. FIG. 1 shows a rectangular battery cell 5 as an example.

In some embodiments, the battery cell includes an electrode assembly, and the battery cell may further include an outer package. The electrode assembly can be prepared by a positive electrode plate, a negative electrode plate, a separator, and the like through winding and/or lamination, and the outer package can be used for packaging the electrode assembly. The outer package may be a hard shell, for example, a hard plastic shell, an aluminum shell, or a steel shell. The outer package may alternatively be a soft pack, for example, a soft pouch. A material of the soft pack may be plastic, for example, one or more of polypropylene (PP), polybutylene terephthalate (PBT), and polybutylene succinate (PBS).

In some embodiments, as shown in FIG. 2, the outer package may include a housing 51 and a cover plate 53. The housing 51 may include a bottom plate and a side plate connected to the bottom plate, where the bottom plate and the side plate enclose an accommodating cavity. The housing 51 has an opening in communication with the accommodating cavity, and the cover plate 53 is configured to cover the opening to close the accommodating cavity. The electrode assembly 52 is packaged in the accommodating cavity. There may be one or more electrode assemblies 52 in the battery cell 5, and the quantity may be adjusted as required.

In some embodiments of this application, battery cells may be assembled into a battery module, and the battery module may include a plurality of battery cells. A specific quantity may be adjusted based on application and capacity of the battery module. FIG. 3 is a schematic diagram of a battery module 4 as an example. As shown in FIG. 3, in the battery module 4, a plurality of battery cells 5 may be sequentially arranged in a length direction of the battery module 4. Certainly, the battery cells may alternatively be arranged in any other manners. Further, the plurality of battery cells 5 may be fastened by using fasteners.

Optionally, the battery module 4 may further include a housing with an accommodating space, and the plurality of battery cells 5 are accommodated in the accommodating space.

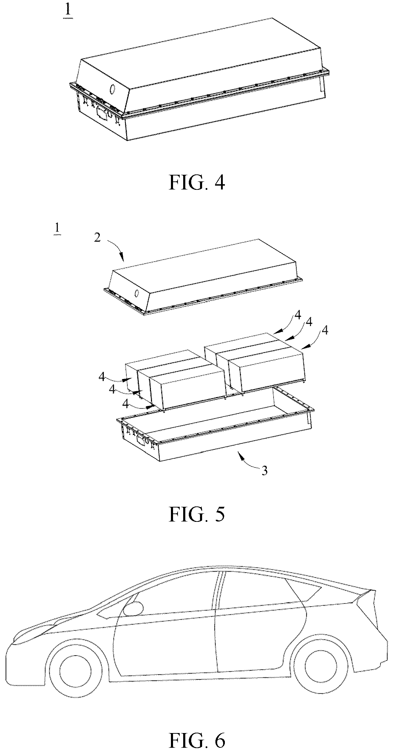

In some embodiments, the battery modules may be further assembled into a battery pack, and a quantity of battery modules included in the battery pack may be adjusted based on application and capacity of the battery pack. FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

The secondary battery of this application includes a positive electrode plate, a negative electrode plate, and an electrolyte, where porosity of the positive electrode plate is A, porosity of the negative electrode plate is B, and the electrolyte includes a first component, where the first component includes one or more compounds represented by formula 1, R₁ and R₂ each independently representfluorine atom or at least one from a group consisting of the following partially or fully fluorinated groups: C1-C10 alkyl group, C2-C10 alkenyl group, C2-C10 alkynyl group, C6-C8 aryl group, C1-C10 alkoxy group, C2-C10 alkenyloxy group, C2-C10 alkynyloxy group, and C6-C8 aryloxy group, Me includes one or more of alkali metals and alkaline earth metals, and a weight percentage of the first component in the electrolyte is D1. The secondary battery satisfies 0.80 ≤A/B ≤ 1.20 and 0.14 ≤ 100D1B ≤ 1.50.

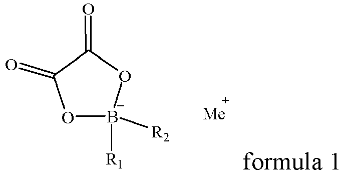

The working process of a secondary battery involves a series of mass transfer and reaction processes such as electron conduction, ion conduction, and electrochemical reactions. The structure and parameter design of the electrode plate of the secondary battery are crucial to the performance of the secondary battery. The most important two indicators for secondary batteries are energy density and power density. Energy density means the energy stored by the secondary battery per unit volume or weight, and power density means the power that can be output by the secondary battery per unit weight or volume.

A smaller porosity of the electrode plate means that more electrode plates can be accommodated in a limited battery housing, and means a higher weight percentage of the electrode active material. This can not only increase the volumetric energy density of the secondary battery but also increase the weight energy density of the secondary battery. However, the porosity of the electrode plate is not better when smaller. When the porosity of the electrode plate is smaller, the compression between the particles of the electrode active material becomes higher, making it difficult for the electrolyte to fully infiltrate the electrode plate, thereby resulting in reduced capacity performance of the electrode active material. In addition, when the porosity of the electrode plate is smaller, the electrolyte absorption and retention capabilities of the secondary battery are reduced, resulting in significantly increased internal resistance and polarization during cycling of the secondary battery, thus leading to a significant increase in capacity attenuation.

Furthermore, high energy density and high power density are contradictory in the design and production process of secondary batteries. To increase the energy density of secondary batteries, it is necessary to increase the weight percentage of the electrode active material and reduce the porosity of the electrode plate. However, high power batteries require a large discharge current during use to provide sufficient power output, resulting in high heat generation during discharge. This leads to many decomposition reactions of the electrolyte at the electrode interface, resulting in increased impedance of the electrode interface, thus affecting the performance of secondary batteries. Therefore, to improve the power performance of secondary batteries, it is necessary to increase the porosity of the electrode plate to reduce heat generation during discharge and lower impedance of the electrode interface.

Therefore, it has become extremely challenging to balance the energy density and power density of secondary batteries, and currently, it is difficult for secondary batteries to achieve good power performance and long cycle life while maintaining high energy density.

The inventors of this application have found in research that when the porosity A of the positive electrode plate, the porosity B of the negative electrode plate, and the percentage D1 of the first component in the electrolyte are adjusted to satisfy 0.80 ≤ A/B ≤ 1.20 and 0.14 ≤ 100D1/B ≤ 1.50, the secondary battery can achieve a balance among high energy density, good cycling performance, and good power performance.

The first component in the electrolyte includes one or more of compounds represented by formula 1. A molecular structure of the compound represented by formula 1 contains a fluorine atom that can be reduced preferentially at the negative electrode compared with an organic solvent, with a reduction product featuring low impedance. This contributes to the formation of a negative electrode interface film of low impedance. The molecular structure of the compound represented by formula 1 contains an oxalate group that can be preferentially oxidized at the positive electrode compared with an organic solvent, with an oxidation product featuring low impedance. This contributes to the formation of a positive electrode interface film of low impedance. Additionally, the atom B in the molecular structure of the compound represented by formula 1 tends to firmly bond with an inorganic component such as LiF in the positive electrode interface film and/or negative electrode interface film, thereby accelerating ion transport and significantly reducing battery polarization.

The compound represented by formula 1 has higher thermal stability than, for example, commonly used LiPF₆, helping improve the overall thermal resistance of the electrolyte. In addition, the compound represented by formula 1 is less sensitive to moisture than LiPF₆, helping improve the water resistance of the electrolyte, reducing the formation of HF, and lowering the acidity of the electrolyte. Therefore, when the electrolyte contains the compound represented by formula 1, the electrolyte can have high thermal stability and electrochemical stability, reducing decomposition reactions of the electrolyte at high temperature and lowering the internal resistance of the battery. According to Joule's law, it can be known that the heat generated by a secondary battery is directly related to the internal resistance of the battery. Therefore, after the internal resistance of the battery is reduced, the heat generated by the secondary battery is also reduced, allowing the secondary battery to have good power performance while maintaining high energy density.

Therefore, the compound represented by formula 1 helps to form low-impedance interface films on the surfaces of the positive and/or negative electrode, improving the performance of the secondary battery. However, the inventors of this application have found in further research that the percentage of the compound represented by formula 1 needs to be reasonably matched with the porosities of the positive electrode plate and negative electrode plate so that ion deintercalation/intercalation at the positive electrode ideally matches intercalation/deintercalation at the negative electrode.

In this application, the porosity A of the positive electrode plate and the porosity B of the negative electrode plate need to satisfy 0.80 ≤ A/B ≤ 1.20. The inventors of this application have found in further research that in this case, the positive electrode plate well matches the negative electrode plate, particularly, ion deintercalation/intercalation at the positive electrode well matches intercalation/deintercalation at the negative electrode. This can ensure that the positive electrode plate and negative electrode plate are evenly infiltrated by the compound represented by formula 1 to the maximum extent, contributing to subsequent film formation and formation of a low-impedance interface film on both the surface of the positive electrode and the surface of the negative electrode, and in addition, contributing to reducing polarization and internal resistance of the battery. When A/B is greater than 1.20, the porosity of the positive electrode plate is large and the porosity of the negative electrode plate is small. This results in poor infiltration of the negative electrode plate by the electrolyte, poor film formation quality at the negative electrode, and poor capacity performance, makes ions that have been successfully deintercalated from the positive electrode and migrated to the negative electrode likely unable to be intercalated into the negative electrode active material, and leads to dendrite formation caused by direct reduction and deposition of some ions on the surface of the negative electrode. Moreover, the low porosity of the negative electrode plate results in poor electrolyte absorption and retention capabilities of the negative electrode plate, causing the secondary battery has significantly increased polarization during cycling and significantly accelerated capacity attenuation. When A/B is less than 0.80, the porosity of the positive electrode plate is small and the porosity of the negative electrode plate is large, resulting in poor infiltration of the positive electrode plate by the electrolyte, poor film formation quality at the positive electrode, and poor capacity performance, making it difficult for the secondary battery to achieve a balance between high energy density and good power performance. In some embodiments, A/B may be 0.80, 0.85, 0.90, 0.95, 1.00, 1.05, 1.10, 1.15, 1.20, or in a range defined by any two of these values. Optionally, 0.85 ≤ A/B ≤ 1.15, or 0.90 ≤ A/B ≤ 1.15. This helps to further improve matching between the positive electrode plate and the negative electrode plate, helps to form a low-impedance interface film on both the surface of the positive electrode and the surface of the negative electrode, and helps to reduce the polarization and internal resistance of the battery.

In this application, the porosity B of the negative electrode plate and the percentage D1 of the first component in the electrolyte further need to satisfy 0.14 ≤ 100D1/B ≤ 1.50. The inventors of this application have found in further research that this can ensure that the compound represented by formula 1 effectively participates in film formation on the surface of the negative electrode and the surface of the positive electrode to form a low-impedance interface film, thereby allowing the secondary battery to achieve a balance between high energy density and good power performance. Additionally, the negative electrode has a much higher impedance increase speed than the positive electrode at low temperature. Therefore, a low-impedance interface film being present on the surface of the negative electrode also contributes to low-temperature discharge performance of the secondary battery. When 100D1/B is greater than 1.50, the high percentage of the first component in the electrolyte and the low porosity of the negative electrode plate result in an excessively thick film formed by the compound represented by formula 1 at the negative electrode and high impedance of the negative electrode interface, because the compound represented by formula 1 preferentially participates in film formation at the negative electrode. This makes it difficult for the secondary battery to achieve a balance between high energy density and good power performance and makes the low-temperature discharge performance of the secondary battery deteriorate. When 100D1/B is less than 0.14, the low percentage of the first component in the electrolyte and the high porosity of the negative electrode plate make the compound represented by formula 1 unable to effectively participate in film formation on neither the surface of the negative electrode nor the surface of the positive electrode, leading to high impedance of both the negative electrode interface and the positive electrode interface, thereby resulting in significant deterioration in power performance and cycling performance of the secondary battery. In some embodiments, 100D1/B may be 0.16, 0.18, 0.20, 0.30, 0.40, 0.50, 0.60, 0.70, 0.80, 0.90, 1.00, 1.10, 1.20, 1.30, 1.40, 1.50, or in a range defined by any two of these values. Optionally, 0.16 ≤ 100D1/B ≤ 1.40, or 0.20 ≤ 100D1/B ≤ 1.20. This can ensure that the compound represented by formula 1 effectively participates in film formation on the surface of the negative electrode and the surface of the positive electrode to form an interface film of lower impedance, thereby allowing the secondary battery to achieve a better balance among high energy density, good power performance, and good low-temperature discharge performance.

Therefore, when the secondary battery satisfies 0.80 ≤ A/B ≤ 1.20 and 0.14 ≤ 100D1/B ≤ 1.50, ion deintercalation/intercalation at the positive electrode well matches the intercalation/deintercalation at the negative electrode. This can ensure that the positive electrode plate and the negative electrode plate are evenly infiltrated by the compound represented by formula 1 to the maximum extent and that the compound represented by formula 1 effectively participates in film formation on the surface of the negative electrode and the surface of the positive electrode to form a low-impedance interface film. In this case, both the polarization and internal resistance of the battery are small, and the capacity attenuation speed and amount of heat generated during charge and discharge of the battery are reduced, so that the secondary battery has good power performance and long cycle life while having high energy density, and in addition, the secondary battery can have good low-temperature discharge performance.

In some embodiments, the secondary battery further satisfies 0.16 ≤ 100D1/A ≤ 1.20. The inventors of this application have found in further research that when the secondary battery further satisfies the above parameter range, it can better ensure that the compound represented by formula 1 effectively participates in film formation on the surface of the positive electrode, further improving the film formation quality and forming an interface film of lower impedance, thereby allowing the secondary battery to achieve a better balance between high energy density and good power performance. Additionally, the secondary battery can also have long cycle life. In addition, this can effectively avoid the following cases: when 100D1/A is greater than 1.20, an excessively thick film may be formed by the compound represented by formula 1 at the positive electrode, possibly resulting in high impedance of the positive electrode interface. This may lead to deterioration in power performance and cycling performance of the secondary battery. When 100D1/A is less than 0.16, the compound represented by formula 1 preferentially participate in film formation on the negative electrode surface, and consequently, a small amount of the compound represented by formula 1 participates in film formation at the positive electrode surface, and weaker the effect in reducing impedance of the positive electrode interface. This may weaken the effect in improving power performance of the secondary battery. In some embodiments, 100D1/A may be 0.18, 0.20, 0.30, 0.40, 0.50, 0.60, 0.70, 0.80, 0.90, 1.00, 1.10, 1.20, or in a range defined by any two of these values. Optionally, 0.20 ≤ 100D1/A ≤ 1.10, or 0.30 ≤ 100D1/A ≤ 1.10.

In some embodiments, the porosity A of the positive electrode plate satisfies 18% ≤ A ≤ 32%. For example, A may be 18%, 19%, 20%, 21%, 22%, 23%, 24%, 25%, 26%, 27%, 28%, 29%, 30%, 31%, 32%, or in a range defined by any two of these values. Optionally, 24% ≤ A ≤ 32%.

In some embodiments, the porosity B of the negative electrode plate satisfies 20% ≤ B ≤ 35%. For example, B may be 20%, 21%, 22%, 23%, 24%, 25%, 26%, 27%, 28%, 29%, 30%, 31%, 32%, 33%, 34%, 35%, or in a range defined by any two of these values.

The principle of the charge and discharge reaction in secondary batteries is electron-ion combination. To ensure good power performance and long cycle life of secondary batteries, the migration speeds of ions and electrons need match each other to allow for the optimal electron transport network and optimal ion conduction pathway of secondary batteries. The porosity A of the positive electrode plate and/or the porosity B of the negative electrode plate further satisfying the above specified range helps to ensure that the positive electrode plate and/or the negative electrode plate also has the optimal electronic transport network and the optimal ion conduction pathway, thereby further improving the electrochemical performance of the secondary battery. The electrode plate having a high porosity contributes to a good ion conduction pathway of the electrode plate, but makes electron contact between electrode active material particles deteriorate, resulting in increased electronic contact impedance between the electrode active material particles and between the electrode active material particles and the current collector, thus leading to an increase in internal resistance of the battery. This is not conducive to further improving the electrochemical performance of the secondary battery. The electrode plate having a low porosity contributes to a well-developed electron transport network of the electrode plate, but makes ion conduction in the electrode plate become difficult, leading to an increase in ion conduction impedance and an increase in the contact area between the electrode active material particles and the electrolyte, thus resulting in an increase in charge transfer impedance, which all lead to an increase in internal resistance of the battery. This is not conducive to further improving the electrochemical performance of the secondary battery either.

In some embodiments, 0.05% ≤ D1 ≤ 0.3%. For example, D1 may be 0.05%, 0.08%, 0.10%, 0.12%, 0.14%, 0.16%, 0.18%, 0.20%, 0.22%, 0.24%, 0.26%, 0.28%, 0.3%, or in a range defined by any two of these values. The percentage D1 of the first component in the electrolyte falling within the proper range helps to form a low-impedance interface film on both the surface of the positive electrode and the surface of the negative electrode, thereby allowing the secondary battery to have good power performance and long cycle life. In addition, this can effectively avoid the following situations: when the percentage D1 of the first component in the electrolyte is greater than 0.3%, the thickness of a film formed by the electrolyte on the surface of the positive electrode and/or surface of the negative electrode surface increases. This may lead to increased internal resistance, deteriorated power performance and cycling performance, and decreased capacity performance of the battery. When the percentage D1 of the first component in the electrolyte is less than 0.05%, the first component has no significant effect in reducing the internal resistance of the battery, which may result in insignificant improvement in power performance and cycling performance of the secondary battery.

In some embodiments, compacted density of the positive electrode plate is P₁ g/cm³, compacted density of the negative electrode plate is P₂ g/cm³, and the secondary battery further satisfies the following relation: 1.75 ≤ P₁/P₂ ≤ 2.50. For example, P₁/P₂ may be 1.80, 1.85, 1.90, 1.95, 2.00, 2.05, 2.10, 2.15, 2.20, 2.25, 2.30, 2.35, 2.40, 2.45, 2.50, or in a range defined by any two of these values. Optionally, 2.00 ≤ P₁/P₂ ≤ 2.40.

The compacted density of electrode plate is an important indicator in electrode plate production, and adjusting the compacted density of electrode plate helps to produce electrode plates with proper porosity. In addition, adjusting the ratio of the compacted density of the positive electrode plate to the compacted density of the negative electrode plate to fall within the above range further helps the positive electrode plate and negative electrode plate to be evenly infiltrated by the compound represented by formula 1 to the maximum extent, facilitating subsequent film formation, helps to form a low-impedance interface film on both the surface of the positive electrode and the surface of the negative electrode, and helps to ensure that the positive electrode plate and the negative electrode plate have the optimal electronic transport network and the optimal ion conduction pathway, thereby further improving the electrochemical performance of the secondary battery.

In some embodiments, the secondary battery further satisfies 1.43 ≤ 10000D1/P₁ ≤ 9.34. For example, 10000D1/P₁ may be 1.45, 1.50, 2.00, 2.50, 3.00, 3.50, 4.00, 4.50, 5.00, 5.50, 6.00, 6.50, 7.00, 7.50, 8.00, 8.50, 9.00, or in a range defined by any two of these values. Optionally, 2.00 ≤ 10000D1/P₁ ≤ 8.00. The inventors of this application have found in further research that in this case, it can ensure that the compound represented by formula 1 effectively participates in film formation on the surface of the positive electrode, further improving the film formation quality and forming an interface film of lower impedance. Additionally, this helps to avoid a decrease in power performance of the secondary battery caused by excessively high or low compacted density of the positive electrode plate.

In some embodiments, the secondary battery further satisfies 2.78 ≤ 10000D1/P₂ ≤ 21.40. For example, 10000D1/P₂ may be 2.80, 3.00, 4.00, 5.00, 6.00, 7.00, 8.00, 9.00, 10.00, 11.00, 12.00, 13.00, 14.00, 15.00, 16.00, 17.00, 18.00, 19.00, 20.00, 21.00, or in a range defined by any two of these values. Optionally, 5.00 ≤ 10000D1/P₂ ≤ 15.00. The inventors of this application have found in further research that in this case, it can ensure that the compound represented by formula 1 effectively participates in film formation on the surface of the negative electrode, further improving the film formation quality and forming an interface film of lower impedance. Additionally, this helps to avoid a decrease in power performance and/or low-temperature discharge performance of the secondary battery caused by excessively high or low compacted density of the negative electrode plate.

In some embodiments, the secondary battery further satisfies 1.75 ≤ P₁/P₂ ≤ 2.50, 1.43 ≤ 10000D1/P₁ ≤ 9.34, and 2.78 ≤ 10000D1/P₂ ≤ 21.40. This helps to further optimize the performance of the secondary battery.

In some embodiments, the compacted density P₁ g/cm³ of the positive electrode plate satisfies 2.8 ≤ P₁ ≤ 3.65. For example, P₁ may be 2.8, 2.85, 2.9, 2.95, 3.0, 3.05, 3.1, 3.15, 3.2, 3.25, 3.3, 3.35, 3.4, 3.45, 3.5, 3.55, 3.6, 3.65, or in a range defined by any two of these values. Optionally, 3.2 ≤ P₁ ≤ 3.5.

In some embodiments, the compacted density P₂ g/cm³ of the negative electrode plate satisfies 1.2 ≤ P₂ ≤ 1.85. For example, P₂ may be 1.2, 1.25, 1.3, 1.35, 1.4, 1.45, 1.5, 1.55, 1.6, 1.65, 1.7, 1.75, 1.8, 1.85, or in a range defined by any two of these values. Optionally, 1.4 ≤ P₂ ≤ 1.8.

The compacted density P₁ of the positive electrode plate and/or the compacted density P₂ of the negative electrode plate further satisfying the above specified range helps to ensure that the positive electrode plate and/or the negative electrode plate has the proper porosity and optimal electronic transport network and the optimal ion conduction pathway, thereby further improving the electrochemical performance of the secondary battery.

In this application, the process parameters for electrode plate cold pressing, such as cold pressing speed, cold pressing temperature, cold pressing pressure, and cold pressing count affect the porosity and/or compacted density of the electrode plate. The parameters of the electrode active material, such as particle size, particle size distribution, and particle morphology also affect the porosity and/or compacted density of the electrode plate. The composition of the electrode film layer or electrode slurry, such as the types and percentages of various components also affect the porosity and/or compacted density of the electrode plate. Therefore, the porosity and/or compacted density of the electrode plate can be adjusted by adjusting one or more of the intrinsic parameter of electrode active material, composition of electrode film or electrode slurry, and process parameter for electrode plate cold pressing.

In some embodiments, morphology of the positive electrode active material includes one or more of sphere and quasi-sphere.

In some embodiments, the positive electrode active material includes primary particles, secondary particles, or a combination thereof and optionally includes secondary particles or a combination of primary particles and secondary particles. Combining the positive electrode active material of a primary particle morphology and the positive electrode active material of a secondary particle morphology helps to improve the compacted density of the positive electrode plate, thereby increasing the energy density of the secondary battery. In some embodiments, optionally, the number percentage of the secondary particles is 50% or more, 60% or more, 70% or more, 80% or more, or 90% or more.

In some embodiments, the positive electrode plate includes a positive electrode active material, and volume-based median particle size of the positive electrode active material satisfies 2.5 µm ≤ Dᵥ50 ≤ 30 µm, optionally 2.5 µm ≤ Dᵥ50 ≤ 25 µm.

Optionally, when the positive electrode active material has a primary particle morphology, the volume-based median particle size of the positive electrode active material of the primary particle morphology satisfies 2. 5 µm ≤ Dᵥ50 ≤ 7 µm, and more optionally, satisfies 2.5 µm ≤ Dᵥ50 ≤ 5.5 µm.

Optionally, when the positive electrode active material has a secondary particle morphology, the volume-based median particle size of the positive electrode active material of the secondary particle morphology satisfies 6 µm ≤ Dᵥ50 ≤ 30 µm, and more optionally, satisfies 6 µm ≤ Dᵥ50 ≤ 25 µm.

Different volume-based median particle sizes Dᵥ50 of positive electrode active material particles mean different compression resistance of the particles, which affects the porosity and/or compacted density of the positive electrode plate. The volume-based median particle size Dᵥ50 of the positive electrode active material falling within the proper range contributes to a proper porosity and/or compacted density of the positive electrode plate, and also contributes to high conductivity of both ions and electrons.

In some embodiments, span of the positive electrode active material satisfies 1 ≤ (Dᵥ90 - Dᵥ10)/Dᵥ50 ≤ 5, optionally 1 ≤ (Dᵥ90 - Dᵥ10)/Dᵥ50 ≤ 2. The span (Dᵥ90 - Dᵥ10)/Dᵥ50 of the positive electrode active material can reflect the degree of uniformity of the particle size distribution of the positive electrode active material, and the degree of uniformity of the particle size distribution affects the porosity and/or compacted density of the positive electrode plate. The span (Dᵥ90 - Dᵥ10)/Dᵥ50 of the positive electrode active material falling within the proper range contributes to a proper porosity and/or compacted density of the positive electrode plate, and also makes the pore size distribution of the positive electrode plate more uniform, thereby helping the secondary battery to achieve a better balance among high energy density, high power density, and high capacity performance.

Therefore, adjusting one or more parameters of the morphology, volume-based median particle size Dᵥ50, and span (Dᵥ90 - Dᵥ10)/Dᵥ50 of the particles of the positive electrode active material to satisfy the above range contributes to the proper porosity and/or compacted density of the positive electrode plate and also helps the secondary battery to achieve a better balance among high energy density, high power density, and high capacity performance.

In some embodiments, morphology of the negative electrode active material includes one or more of sphere, quasi-sphere, block, and sheet.

In some embodiments, the negative electrode active material includes primary particles, secondary particles, or a combination thereof and optionally includes secondary particles or a combination of primary particles and secondary particles. Combining the negative electrode active material of a primary particle morphology and the negative electrode active material of a secondary particle morphology helps to improve the compacted density of the negative electrode plate, thereby increasing the energy density of the secondary battery. In some embodiments, optionally, the number percentage of the secondary particles is 50% or more, 60% or more, 70% or more, 80% or more, or 90% or more.

In some embodiments, the negative electrode plate is provided with a negative electrode active material, and volume-based median particle size of the negative electrode active material satisfies 8 µm ≤ Dᵥ50 ≤ 22 µm, optionally 10 µm ≤ Dᵥ50 ≤ 16 µm.Different volume-based median particle sizes Dᵥ50 of negative electrode active material particles mean different compression resistance of the particles, which affects the porosity and/or compacted density of the negative electrode plate. The volume-based median particle size Dᵥ50 of the negative electrode active material falling within the proper range contributes to a proper porosity and/or compacted density of the negative electrode plate, and also contributes to high conductivity of both ions and electrons.

In some embodiments, span of the negative electrode active material satisfies 0.5 ≤ (Dᵥ90 - Dᵥ10)/Dᵥ50 ≤ 5, optionally 0.5 ≤ (Dᵥ90 - Dᵥ10)/Dᵥ50 ≤ 1.5. The span (Dᵥ90 - Dᵥ10)/Dᵥ50 of the negative electrode active material can reflect the degree of uniformity of the particle size distribution of the negative electrode active material, and the degree of uniformity of the particle size distribution affects the porosity and/or compacted density of the negative electrode plate. The span (Dᵥ90 - Dᵥ10)/Dᵥ50 of the negative electrode active material falling within the proper range contributes to a proper porosity and/or compacted density of the negative electrode plate, and also makes the pore size distribution of the negative electrode plate more uniform, thereby helping the secondary battery to achieve a better balance among high energy density, high power density, and high capacity performance.

Therefore, adjusting one or more parameters of the morphology, volume-based median particle size Dᵥ50, and span (Dᵥ90 - Dᵥ10)/Dᵥ50 of the particles of the negative electrode active material to satisfy the above range contributes to the proper porosity and/or compacted density of the negative electrode plate and also helps the secondary battery to achieve a better balance among high energy density, high power density, and high capacity performance.

The number percentage of the secondary particles in the electrode plate can be obtained in the following method: randomly selecting multiple test areas on the electrode film, obtaining images of the multiple test areas using a scanning electron microscope, and calculating the percentage of particles of a secondary particle morphology in each image to the total number of particles of the electrode active material. The average value of the statistical results of multiple test areas is the number percentage of the secondary particles.

### [Electrolyte]

In this application, R₁ and R₂ represent fluorine atom or fluorine-containing group (for example, partially or fully fluorinated organic group). The presence of fluorine atoms helps to form a thinner and denser positive electrode interface film and/or negative electrode interface film, thereby facilitating uniform ion transport and effectively suppressing dendrite formation.

In some embodiments, one of R₁ and R₂ represents fluorine atom, and the other represents at least one of a group consisting of the following partially or fully fluorinated groups: C1-C10 alkyl group, C2-C10 alkenyl group, C2-C10 alkynyl group, C6-C8 aryl group, C1-C10 alkoxy group, C2-C10 alkenyloxy group, C2-C10 alkynyloxy group, and C6-C8 aryloxy group.

In some embodiments, one of R₁ and R₂ represents fluorine atom, and the other represents at least one of a group consisting of the following partially or fully fluorinated groups: methyl, ethyl, n-propyl, isopropyl, n-butyl, tert-butyl, vinyl, propenyl, allyl, butadienyl, ethynyl, propynyl, phenyl, methoxy, ethoxy, propoxy, vinyloxy, propyleneoxy, acetyleneoxy, propynyloxy, and phenoxy.

In some embodiments, both R₁ and R₂ represent fluorine atom.

In this application, Me includes one or more of alkali metal and alkaline earth metal. Optionally, the alkali metal includes one or more of Li, Na, and K. Optionally, the alkaline earth metal includes Ca, Mg, or a combination thereof.

In some embodiments, Me represents Li.

In some embodiments, the compound represented by formula 1 includes one or more of the following compounds:

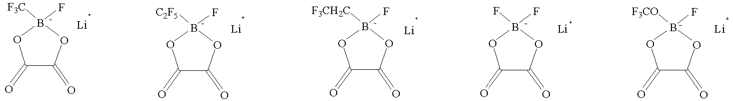

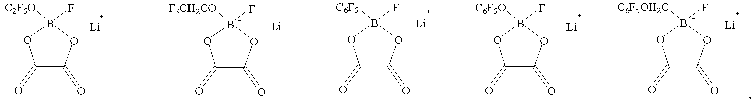

In some embodiments, the electrolyte further includes a second component, and the second component includes lithium hexafluorophosphate (LiPF₆).

Lithium hexafluorophosphate features high ionic conductivity. Therefore, its percentage falling within a proper range helps to improve the overall ionic conductivity of the electrolyte, accelerate ion transport, and enhance the capacity performance of the secondary battery. However, lithium hexafluorophosphate has poor thermal stability at high temperature and decomposes to form PF₅ at a relatively high temperature. PF₅ reacts with water to form HF, which is likely to corrode the positive electrode active material and increase gas generation in the battery. When the electrolyte contains both the compound represented by formula 1 and lithium hexafluorophosphate, the compound represented by formula 1 can react with lithium hexafluorophosphate to form a compound LiPF₄C₂O₄, thereby reducing the decomposition of partial lithium hexafluorophosphate and formation of HF. This can further improve the cycling performance of the secondary battery.

In some embodiments, optionally, a weight percentage D2 of the second component in the electrolyte is 5% or more, more optionally 8% or more, for example, 8% to 30%, 10% to 25%, or 10% to 20%.

In some embodiments, the electrolyte further includes a third component, and the third component includes one or more of lithium tetrafluoroborate (LiBF₄), lithium difluorophosphate (LiPO₂F₂), lithium perchlorate (LiClO₄), lithium hexafluoroarsenate (LiAsF₆), lithium difluorobis(oxalato)phosphate (LiDFOP), and lithium tetrafluoro oxalato phosphate (LiTFOP). The third component can serve as an auxiliary lithium salt to further improve the properties of interfaces at the positive electrode and/or negative electrode or improve the ionic conductivity or thermal stability of the electrolyte.

In some embodiments, optionally, the third component includes lithium tetrafluoroborate, lithium difluorophosphate, or a combination thereof. Lithium tetrafluoroborate has high thermal stability and therefore can improve the high-temperature stability of the secondary battery. Lithium tetrafluoroborate further has low charge transfer resistance and therefore can further improve the low-temperature discharge performance of the secondary battery and expand the electrochemical window of the electrolyte. Lithium difluorophosphate has high electrochemical stability and therefore can increase the ionic conductivity of the electrolyte, improve the property of a positive electrode interface film and/or negative electrode interface film, and help to construct a stable and low-impedance positive electrode interface film and/or negative electrode interface film, thereby effectively reducing decomposition of the electrolyte and further improving the power performance and safety performance of the secondary battery.

In some embodiments, optionally, a weight percentage D3 of the third component in the electrolyte is 0.5% or less, more optionally 0.25% or less.

In some embodiments, optionally, a weight ratio D3/D1 of the third component to the first component is 0.5 to 2. This helps to fully exert the synergistic effect between the third component and the first component and also contributes to good low-temperature discharge performance of the secondary battery.

In some embodiments, optionally, a weight percentage D3 of the third component in the electrolyte satisfies that D3 is 0.5% or less, and D3/D1 is 0.5 to 2. This helps to further exert the synergistic effect between the third component and the first component.

In some embodiments, the electrolyte further includes a fourth component, and the fourth component includes fluoroethylene carbonate (FEC). FEC can undergo reductive decomposition reactions at high potential to form an interface film with some flexibility on the surface of the negative electrode active material, and can inhibit reductive decomposition of the organic solvent of lower potential and inhibit intercalation of the organic solvent into the negative electrode active material. Therefore, when the electrolyte contains FEC, the cycling performance of the secondary battery can be effectively improved. However, FEC is prone to decomposition to form HF, and HF damages the positive electrode interface film and corrode the positive electrode active material, increasing heat generation and gas generation of the secondary battery. The compound represented by formula 1 can act as a stabilizer for the positive electrode active material. Atom B in the structure of the compound can interact with atom O on the surface of the positive electrode active material, thereby stabilizing the crystal structure of the positive electrode active material and reducing damage caused by HF to the crystal structure of the positive electrode active material. Therefore, the combined use of the compound represented by formula 1 and FEC helps to fully exert the effect of FEC in improving the cycling performance of the secondary battery. In addition, FEC having a high dielectric constant further helps the anion of the compound represented by formula 1 to become a free ion, reducing anion-cation association, thereby fully leveraging the effect of the compound represented by formula 1 in improving the power performance and cycling performance of the secondary battery.

In some embodiments, optionally, a weight percentage D4 of the fourth component in the electrolyte is 5% or less, more optionally 2.5% or less.

In some embodiments, optionally, a weight ratio D4/D1 of the fourth component to the first component is 5 to 100, more optionally, 5 to 75, 5 to 50, or 5 to 40. The inventors have found through further research that the weight ratio of the fourth component to the first component falling within a proper range can fully utilize the synergistic effect between the fourth component and the first component, thereby further improving the cycling performance of the secondary battery without significantly increasing the gas production of the secondary battery.

In some embodiments, optionally, a weight percentage D4 of the fourth component in the electrolyte satisfies that D4 is 5% or less, and D4/D1 is 5 to 100. This helps to further exert the synergistic effect between the fourth component and the first component.

In some embodiments, the electrolyte further includes a fifth component, the fifth component includes one or more of cyclic carbonate compound, linear carbonate compound, carboxylate compound, sulfone compound, and ether compound. In this application, the fifth component primarily serves as an organic solvent for dissolution of other components in the electrolyte.

For example, the cyclic carbonate compound may include one or more of ethylene carbonate (EC), propylene carbonate (PC), and butylene carbonate (BC). For example, the linear carbonate compound may include one or more of ethyl methyl carbonate (EMC), diethyl carbonate (DEC), dimethyl carbonate (DMC), dipropyl carbonate (DPC), methyl propyl carbonate (MPC), and ethylene propyl carbonate (EPC). For example, the carboxylate compound may include one or more of methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), and gamma-butyrolactone (GBL). For example, the sulfone compound may include one or more of sulfolane (SF), methyl sulfonyl methane (MSM), ethyl methanesulfonate (EMS), and ethyl sulfonyl ethane (ESE). For example, the ether compounds include one or more of tetrahydrofuran (THF), 2-methyltetrahydrofuran, 1,3-dioxolane (DOL), ethylene glycol monomethyl ether, dimethoxyethane (DME), tetraethylene glycol dimethyl ether, dimethoxymethane (DMM), and diglyme (DG).

In some embodiments, optionally, a weight percentage D5 of the fifth component in the electrolyte is 60% or more, optionally 65% or more, 70% or more, 75% or more, or 80% or more.

In some embodiments, optionally, the fifth component includes at least a cyclic carbonate compound and a linear carbonate compound. When the percentage of the lithium salt such as lithium hexafluorophosphate is high, the viscosity of the electrolyte increases, and the ionic conductivity thereof decreases, which is not conducive to ion transport. The cyclic carbonate compound can increase the ionic conductivity of the electrolyte due to its high dielectric constant, and the linear carbonate compound can reduce the viscosity of the electrolyte due to its low viscosity. Thus, the fifth component including both the cyclic carbonate compound and the linear carbonate compound helps the electrolyte to obtain suitable viscosity and ionic conductivity, which in turn facilitates ion transport.

The cyclic carbonate compound having a high dielectric constant helps increase the ionic conductivity of the electrolyte, but is prone to decomposition, affecting the storage performance of the secondary battery. Therefore, its percentage needs to be controlled within a proper range.

In some embodiments, the weight percentage of the cyclic carbonate compound in the electrolyte can be greater than 0 and less than or equal to 40%, optionally 5% to 40%, 8% to 35%, or 10% to 30%.

In some embodiments, the weight percentage of the linear carbonate compound in the electrolyte can be 40% to 85%, optionally 50% to 80%, 55% to 80%, or 60% to 80%.

In some embodiments, the electrolyte may further include other components than the foregoing components. For example, it may include one or more of halogen-substituted cyclic carbonate compound, nitrile compound, phosphazene compound, aromatic hydrocarbon and halogenated aromatic hydrocarbon compounds, isocyanate compound, anhydride compound, sulfate compound, sulfite compound, sulfonate compound, and disulfonate compound. Other components in the electrolyte are not limited to a specific type in this application, as long as they do not compromise the essence of this application. For example, they may include one or more of 1,3-propane sultone (PS), vinyl carbonate (VC), and 1,3,2-dioxathiolane 2,2-dioxide (DTD).

In some embodiments, optionally, the total weight percentage of these other components is 5% or less, more optionally 2.5% or less, based on the total weight of the electrolyte.

In this application, the components and their percentages in the electrolyte can be determined in methods known in the art. For example, the gas chromatography-mass spectrometry (GC-MS), ion chromatography (IC), liquid chromatography (LC), nuclear magnetic resonance (NMR), and inductively coupled plasma-optical emission spectroscopy (ICP-OES) method may be used for determination.

It should be noted that for electrolyte test in this application, a fresh prepared electrolyte may be used directly, or an electrolyte may be obtained from a secondary battery. An example method for obtaining an electrolyte from a secondary battery includes the following steps: discharging the secondary battery to a discharge cut-off voltage (generally fully discharging the battery for safety), performing centrifugation, and using an appropriate amount of the centrifuged electrolyte as the electrolyte. The electrolyte may alternatively be obtained directly from an injection opening of the secondary battery.

### [Positive electrode plate]

The positive electrode plate includes a positive electrode current collector and a positive electrode film layer disposed on at least one surface of the positive electrode current collector and including a positive electrode active material. For example, the positive electrode current collector has two opposite surfaces in its thickness direction, and the positive electrode film layer is provided on either or both of the two opposite surfaces of the positive electrode current collector.

The positive electrode active material can be any positive electrode active material known in the art used for secondary batteries. For example, the positive electrode active material includes one or more of layered lithium transition metal oxide, lithium-containing phosphate, and their respective modified compounds, and optionally includes one or more of layered lithium transition metal oxide and modified compound thereof or includes a mixture of layered lithium transition metal oxide and modified compound thereof and lithium-containing phosphate and modified compound thereof. Optionally, the layered lithium transition metal oxide includes one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Optionally, the lithium-containing phosphate includes one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds. In this application, the modified compounds of the foregoing positive electrode active materials may be modified by doping and/or surface coating on the positive electrode active material.

In some embodiments, to further increase the energy density of the secondary battery, the positive electrode active material includes a layered lithium transition metal oxide having a molecular formula of LiₐNi_{b}Co_{c}MnₐAlₑM_{f}O_{g}Aₕ, M represents transition metal site doping cation, A represents oxygen site doping anion, 0.8 ≤ a ≤ 1.2, 0 ≤ b ≤ 1, 0 ≤ c ≤ 1, 0 ≤ d ≤ 1, 0 ≤ e ≤ 1, 0 ≤ f ≤ 0.2, 0 ≤ g ≤ 2, 0 ≤ h ≤ 2, b + c + d + e + f + f = 1, and g + h = 2.

The layered lithium transition metal oxide having a molecular formula of LiₐNi_{b}Co_{c}MnₐAlₑM_{f}O_{g}Aₕ is optionally modified through cation M doping, anion A doping, or both cation M doping and anion A doping. The doped layered lithium transition metal oxide obtained has a more stable crystal structure and can further enhance the electrochemical performance of the secondary battery, such as cycling performance and power performance.

In some embodiments, M includes one or more of Si, Ti, Mo, V, Ge, Se, Zr, Nb, Ru, Pd, Sb, Ce, Te, and W.

In some embodiments, A includes one or more of F, N, P, and S. Optionally, A is F. After modified through F doping, LiₐNi_{b}Co_{c}MnₐAlₑM_{f}O_{g}Aₕ has a more stable crystal structure, thus enabling the secondary battery to have better cycling performance and power performance.

The values of a, b, c, d, e, f, g, and h satisfy the following conditions so that LiₐNi_{b}Co_{c}MnₐAlₑM_{f}O_{g}Aₕ is electrically neutral.

In some embodiments, 0 < b < 0.98. Optionally, 0.50 ≤ b < 0.98, 0.55 ≤ b < 0.98, 0.60 ≤ b < 0.98, 0.65 ≤ b < 0.98, 0.70 ≤ b < 0.98, 0.75 ≤ b < 0.98, or 0.80 ≤ b ≤ 0.98.

In some embodiments, c = 0.

In some embodiments, 0 < c ≤ 0.20. Optionally, 0 < c ≤ 0.15, 0 < c ≤ 0.10, 0 < c ≤ 0.09, 0 < c ≤ 0.08, 0 < c ≤ 0.07, 0 < c ≤ 0.06, 0 < c ≤ 0.05, 0 < c ≤ 0.04, 0 < c ≤ 0.03, 0 < c ≤ 0.02, or 0 < c ≤ 0.01. Cobalt is scarce in the Earth's crust difficult to mine, and expensive. Therefore, low cobalt or no cobalt has become an inevitable development trend for positive electrode active materials. However, cobalt contributes greatly to the ion diffusion rate of positive electrode active materials, and low cobalt or no cobalt reduces the ion diffusion rate of positive electrode active materials and affects the cycling performance of secondary batteries. Researchers have been working to increase the ion diffusion rate of positive electrode active materials having low cobalt or no cobalt, but there is no good solution yet.

The inventors of this application have surprisingly found during research that the compound represented by formula 1 in the electrolyte can form a low-impedance protective film on the surface of the positive electrode active material, and that atom B in the molecular structure of the compound can easily bond with atom O in the positive electrode active material to reduce the diffusion resistance of ions in the bulk phase of the positive electrode active material. Therefore, when the electrolyte contains a proper amount of the compound represented by formula 1, the positive electrode active material having low cobalt or no cobalt can have a significantly improved ion diffusion rate, and the surface can be supplemented with ions within the bulk phase of the positive electrode active material having low cobalt or no cobalt in time, stabilizing the crystal structure of the positive electrode active material having low cobalt or no cobalt. The stabler crystal structure of the positive electrode active material having low cobalt or no cobalt can greatly reduce the probability that the crystallinity, chemical, or electrochemical property of the positive electrode active material becomes unstable, for example, reducing the probability of irreversible deformation and lattice defects of the positive electrode active material.

In some embodiments, d = 0 and 0 < e < 0.50. Optionally, d = 0 and 0 < e ≤ 0.45, d = 0 and 0 < e < 0.40, d = 0 and 0 < e ≤ 0.35, d = 0 and 0 < e ≤ 0.30, d = 0 and 0 < e ≤ 0.25, d = 0 and 0 < e ≤ 0.20, d = 0 and 0 < e ≤ 0.15, or d = 0 and 0 < e ≤ 0.10.

In some embodiments, e = 0 and 0 < d < 0.50. Optionally, e = 0 and 0 < d ≤ 0.45, e = 0 and 0 < d ≤ 0.40, e = 0 and 0 < d ≤ 0.35, e = 0 and 0 < d ≤ 0.30, e = 0 and 0 < d ≤ 0.25, e = 0 and 0 < d ≤ 0.20, e = 0 and 0 < d ≤ 0.15, or e = 0 and 0 < d ≤ 0.10.

In some embodiments, 0 < d < 0.50 and 0 < e < 0.50. Optionally, 0 < d ≤ 0.30 and 0 < e ≤ 0.10.

In some embodiments, g = 2 and h = 0.

In some embodiments, g = 0 and h = 2.

In some embodiments, 0 < g < 2, 0 < h < 2, and g + h = 2.

For example, the layered lithium transition metal oxide having a molecular formula of LiₐNi_{b}Co_{c}MnₐAlₑM_{f}O_{g}Aₕ includes but is not limited to one or more of LiNi_{0.8}Co_{0.1}Mn_{0.1}O₂, LiNi_{0.6}Co_{0.2}Mn_{0.2}O₂, LiNi_{0.5}Co_{0.2}Mn_{0.3}O₂, LiNi_{0.8}CO_{0.05}Mn_{0.15}O₂, LiNi_{0.7}Mn_{0.3}O₂, LiNi_{0.69}CO_{0.01}Mn_{0.3}O₂, LiNi_{0.68}Co_{0.02}Mn_{0.3}O₂, LiNi_{0.65}Co_{0.05}Mn_{0.3}O₂, LiNi_{0.63}Co_{0.07}Mn_{0.3}O₂, and LiNi_{0.61}Co_{0.09}Mn_{0.3}O₂.

LiₐNi_{b}Co_{c}MnₐAlₑM_{f}O_{g}Aₕ may be prepared in a conventional method in the art. An example preparation method is as follows: sintering a lithium source, a nickel source, a cobalt source, a manganese source, an aluminum source, an element M precursor, and an element A precursor after mixing them, to obtain LiaNibCocMndAleMfOgAh. A sintering atmosphere may be an oxygen-containing atmosphere, for example, an air atmosphere or an oxygen atmosphere. An O₂ concentration of a sintering atmosphere is, for example, 70% to 100%. A sintering temperature and sintering time may be adjusted depending on an actual situation.

For example, the lithium source includes but is not limited to one or more of lithium oxide (Li₂O), lithium phosphate (Li₃PO₄), lithium dihydrogen phosphate (LiH₂PO₄), lithium acetate (CH₃COOLi), lithium hydroxide (LiOH), lithium carbonate (Li₂CO₃), and lithium nitrate (LiNO₃). For example, the nickel source includes but is not limited to one or more of nickel sulfate, nickel nitrate, nickel chloride, nickel oxalate, and nickel acetate. For example, the cobalt source includes but is not limited to one or more of cobalt sulfate, cobalt nitrate, cobalt chloride, cobalt oxalate, and cobalt acetate. For example, the manganese source includes but is not limited to one or more of manganese sulfate, manganese nitrate, manganese chloride, manganese oxalate, and manganese acetate. For example, the aluminum source includes but is not limited to one or more of aluminum sulfate, aluminum nitrate, aluminum chloride, aluminum oxalate, and aluminum acetate. For example, the element M precursor includes but is not limited to one or more of oxide, nitric acid compound, carbonic acid compound, hydroxide compound, and acetic acid compound of element M. For example, the element A precursor includes but is not limited to one or more of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium hydrogen sulfide, hydrogen sulfide, lithium sulfide, ammonium sulfide, and elemental sulfur.

In some embodiments, based on the total weight of the positive electrode film layer, a weight percentage of the layered lithium transition metal oxide having a molecular formula of LiₐNi_{b}Co_{c}MnₐAlₑM_{f}O_{g}Aₕ is 80% or more, optionally, 85% or more, or 90% or more.

In some embodiments, the positive electrode film layer further optionally includes a positive electrode conductive agent. The positive electrode conductive agent is not limited to a particular type in this application. For example, the positive electrode conductive agent may include one or more of superconducting carbon, conductive graphite, acetylene black, carbon black, Ketjen black, carbon dots, carbon nanotubes, graphene, and carbon nanofiber. In some embodiments, a weight percentage of the positive electrode conductive agent is 15% or less, optionally, 10% or less or 5% or less, based on the total weight of the positive electrode film layer.

In some embodiments, the positive electrode film layer further optionally includes a positive electrode binder. The positive electrode binder is not limited to a particular type in this application. For example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, a weight percentage of the positive electrode binder is 5% or less, optionally, 3% or less or 2% or less, based on the total mass of the positive electrode film layer.

In some embodiments, the positive electrode current collector may be a metal foil current collector or a composite current collector. For example, the metal foil may be an aluminum foil. The composite current collector may include a polymer material matrix and a metal material layer formed on at least one surface of the polymer material matrix. For example, the metal material may include one or more of aluminum, aluminum alloy, nickel, nickel alloy, titanium, titanium alloy, silver, and silver alloy. For example, the polymer material matrix may include one or more of polypropylene (PP), polyethylene terephthalate (PET), polybutylene terephthalate (PBT), polystyrene (PS), and polyethylene (PE).

The positive electrode film layer is usually formed by applying a positive electrode slurry onto the positive electrode current collector, followed by drying and cold pressing. The positive electrode slurry is typically formed by dispersing the positive electrode active material, the optional conductive agent, the optional binder, and any other components into a solvent and stirring them until the mixture is uniform. The solvent may be but is not limited to N-methylpyrrolidone (NMP).

### [Negative electrode plate]

The negative electrode plate includes a negative electrode current collector and a negative electrode film layer disposed on at least one surface of the negative electrode current collector and including a negative electrode active material. For example, the negative electrode current collector has two opposite surfaces in its thickness direction, and the negative electrode film layer is provided on either or both of the two opposite surfaces of the negative electrode current collector.

The negative electrode active material may be a negative electrode active material for secondary battery well-known in the art. For example, the negative electrode active material includes one or more of carbon-based material, silicon-based material, tin-based material, lithium titanate, and composite material obtained by coating and modifying these materials.

In some embodiments, the negative electrode active material includes one or more of carbon-based material and composite material obtained by coating and modifying this material. Optionally, the carbon-based material includes one or more of graphite (for example, natural graphite, artificial graphite, or a combination thereof), soft carbon, hard carbon, and composite material obtained by coating and modifying these materials.

In some embodiments, a weight percentage of the negative electrode active material is 80% or more, optionally, 85% or more or 90% or more, based on the total weight of the negative electrode film layer.

In some embodiments, the negative electrode film layer further optionally includes a negative electrode conductive agent. The negative electrode conductive agent is not limited to a particular type in this application. For example, the negative electrode conductive agent may include one or more of superconducting carbon, conductive graphite, acetylene black, carbon black, Ketjen black, carbon dots, carbon nanotubes, graphene, and carbon nanofiber. In some embodiments, a weight percentage of the negative electrode conductive agent is 15% or less, optionally, 10% or less or 5% or less, based on the total weight of the negative electrode film layer.

In some embodiments, the negative electrode film layer further optionally includes a negative electrode binder. The negative electrode binder is not limited to a particular type in this application. For example, the negative electrode binder may include one or more of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS). In some embodiments, a weight percentage of the negative electrode binder is 5% or less based on the total weight of the negative electrode film layer.

In some embodiments, the negative electrode film layer further optionally includes another additive. For example, the another additive may include a thickener, for example, sodium carboxymethyl cellulose (CMC) or PTC thermistor material. In some embodiments, a weight percentage of the another additive is 2% or less based on the total weight of the negative electrode film layer.

In some embodiments, the negative electrode current collector may be a metal foil current collector or a composite current collector. For example, the metal foil may be a copper foil. The composite current collector may include a polymer material matrix and a metal material layer formed on at least one surface of the polymer material matrix. For example, the metal material may include one or more of copper, copper alloy, nickel, nickel alloy, titanium, titanium alloy, silver, and silver alloy. For example, the polymer material matrix may include one or more of polypropylene (PP), polyethylene terephthalate (PET), polybutylene terephthalate (PBT), polystyrene (PS), and polyethylene (PE).

The negative electrode film layer is usually formed by applying a negative electrode slurry onto the negative electrode current collector, followed by drying and cold pressing. The negative electrode slurry is usually formed by dispersing the negative electrode active material, the optional conductive agent, the optional binder, and the optional another additive in a solvent and stirring them to uniformity. The solvent may be but is not limited to N-methylpyrrolidone (NMP) or deionized water.

### [Separator]

In some embodiments, the secondary battery further includes a separator. The separator is disposed between the positive electrode plate and the negative electrode plate, mainly to prevent short circuit between the positive electrode and the negative electrode and allow ions to pass through. The separator is not limited to a particular type in this application, and may be any well-known porous separator with good chemical stability and mechanical stability.

In some embodiments, a material of the separator may include one or more of glass fiber, non-woven fabric, polyethylene, polypropylene, and polyvinylidene fluoride. The separator may be a single-layer thin film or a multi-layer composite thin film. When the separator is a multi-layer composite thin film, all layers may be made of the same or different materials.

### [Preparation method]

The preparation method of secondary battery in this application is well known. In some embodiments, the positive electrode plate, the separator, the negative electrode plate, and the electrolyte may be assembled to form a secondary battery. For example, the positive electrode plate, the separator, and the negative electrode plate may be made into an electrode assembly through winding and/or lamination; and the electrode assembly is put in an outer package which is filled with electrolyte after drying, followed by processes such as vacuum packaging, standing, formation, and shaping, to obtain a battery cell. Alternatively, multiple battery cells may further be connected in series, parallel, or series-parallel to form a battery module. Multiple battery modules may alternatively be connected in series, parallel, or series-parallel to form a battery pack. In some embodiments, multiple battery cells may alternatively be directly assembled into a battery pack.

This application further provides an electric apparatus, where the electric apparatus includes the secondary battery of this application. The secondary battery may be used as a power source of the electric apparatus or an energy storage unit of the electric apparatus. The electric apparatus may be, but is not limited to, a mobile device (for example, a mobile phone, a tablet computer, or a notebook computer), an electric vehicle (for example, a full electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

A specific type of secondary battery, for example, a battery cell, battery module, or battery pack may be selected for the electric apparatus depending on requirements for using the electric apparatus.

FIG. 6 is a schematic diagram of an electric apparatus as an example. This electric apparatus is a battery electric vehicle, a hybrid electric vehicle, a plug-in hybrid electric vehicle, or the like. To satisfy requirements of the electric apparatus for high power and high energy density, a battery pack or a battery module may be used as a battery source.

In another example, the electric apparatus may be a mobile phone, a tablet computer, a notebook computer, or the like. The electric apparatus is usually required to be light and thin, and a battery cell may be used as a power source.

### Examples

Content disclosed in this application is described in more detail in the following examples. These examples are merely intended for illustrative purposes because various modifications and changes made without departing from the scope of the content disclosed in this application are apparent to a person skilled in the art. Unless otherwise stated, all parts, percentages, and ratios reported in the following examples are based on masses, all reagents used in the examples are commercially available or synthesized in a conventional manner, and can be used directly without further treatment, and all instruments used in the examples are commercially available.

### Example 1

### Preparation of positive electrode plate

A positive electrode active material LiNi_{0.6}Co_{0.2}Mn_{0.2}O₂ (with a morphology of quasi-sphere, number percentage of secondary particles of 60%, and Dᵥ50 of 20 µm), a conductive agent carbon black, and a binder polyvinylidene fluoride (PVDF) were thoroughly mixed and stirred in a proper amount of solvent NMP at a weight ratio of 97.5:1.4:1.1 to form a uniform positive electrode slurry. The positive electrode slurry was evenly applied onto the surface of a positive electrode current collector aluminum foil, followed by drying and cold pressing, to obtain a positive electrode plate. One or more of process parameters for cold pressing, such as cold pressing speed, cold pressing temperature, cold pressing pressure, and cold pressing count, were adjusted to allow the positive electrode plate to have a compacted density of 3.4 g/cm³ and a porosity of 25%.

### Preparation of negative electrode plate

A negative electrode active material graphite (with a morphology of quasi-sphere, number percentage of secondary particles of 80%, and Dᵥ50 of 11 µm), a binder styrene-butadiene rubber (SBR), a thickener sodium carboxymethyl cellulose (CMC-Na), and a conductive agent carbon black (Super P) were thoroughly mixed and stirred in a proper amount of solvent deionized water at a mass ratio of 96.2:1.8:1.2:0.8 to form a uniform negative electrode slurry. The negative electrode slurry was evenly applied onto the surface of a negative electrode current collector copper foil, followed by drying and cold pressing, to obtain a negative electrode plate. One or more of process parameters for cold pressing, such as cold pressing speed, cold pressing temperature, cold pressing pressure, and cold pressing count, were adjusted to allow the negative electrode plate to have a compacted density of 1.6 g/cm³ and a porosity of 27%.

### Separator

A porous polyethylene (PE) film was used as a separator.

### Preparation of electrolyte

Components were mixed to uniformity according to the compositions in Table 1 to produce an electrolyte. In Table 1, the amount of each composition is based on the total weight of the electrolyte.

The first component was

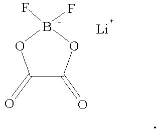

The second component was lithium hexafluorophosphate.

The third component was lithium tetrafluoroborate.

The fourth component was fluoroethylene carbonate.

The fifth component was a mixture of ethylene carbonate (EC), ethyl methyl carbonate (EMC), and diethyl carbonate (DEC) at a weight ratio of 1:1:1.

### Preparation of secondary battery

The positive electrode plate, the separator, and the negative electrode plate were stacked in order and wound, to obtain an electrode assembly. The electrode assembly was put into an outer package, and the foregoing electrolyte was added, followed by sealing, standing, formation, aging, and other processes, to obtain a secondary battery.

### Examples 2 to 7 and Comparative Examples 1 to 3

Secondary batteries were prepared in the same method as that in Example 1 except that the parameters for electrolyte preparation were adjusted. See Table 1 for details.

### Examples 8 to 10 and Comparative Examples 4 and 5

Secondary batteries were prepared in the same method as that in Example 1 except that the process parameters for negative electrode plate cold pressing. For example, one or more of cold pressing speed, cold pressing temperature, cold pressing pressure, and cold pressing count could be adjusted, and parameters of negative electrode active material were adjusted to make the negative electrode plates in the examples and comparative examples have different porosity. The negative electrode active material used in Comparative Example 4 had a Dᵥ50 of 12 µm, and the negative electrode active material used in Comparative Example 5 had a Dᵥ50 of 10 µm. The negative electrode active material used in Example 8 had a Dᵥ50 of 11.7 µm, the negative electrode active material used in Example 9 had a Dᵥ50 of 11.4 µm, and the negative electrode active material used in Example 10 had a Dᵥ50 of 10.5 µm.

### Examples 11 to 13 and Comparative Examples 6 and 7

Secondary batteries were prepared in the same method as that in Example 1 except that the process parameters for positive electrode plate cold pressing. For example, one or more of cold pressing speed, cold pressing temperature, cold pressing pressure, and cold pressing count could be adjusted, and parameters of positive electrode active material were adjusted to make the positive electrode plates in the examples and comparative examples have different porosity. The number percentage of secondary particles in the positive electrode active material used in Comparative Example 6 was 80%, and the number percentage of secondary particles in the positive electrode active material used in Comparative Example 7 was 50%. The number percentage of secondary particles in the positive electrode active material used in Example 11 was 75%, the number percentage of secondary particles in the positive electrode active material used in Example 12 was 70%, and the number percentage of secondary particles in the positive electrode active material used in Example 13 was 55%.

### Examples 14 to 22

Secondary batteries were prepared in the same method as that in Example 1 except that the parameters for electrolyte preparation were adjusted. See Table 1 for details.

### Tests

### (1) Room-temperature cycling performance test for secondary battery

At 25°C, the secondary battery was charged to 4.3 V at a constant current of 1C and charged to a current of 0.05C at a constant voltage. At this point, the secondary battery was fully charged, and a charge capacity at this point was recorded as a charge capacity of the first cycle. The secondary battery was left standing for 5 min and discharged to 2.8 V at a constant current of 1C. This was a charge and discharge cycle, and a discharge capacity at this moment was recorded as a discharge capacity of the first cycle. The secondary battery was subjected to the charge and discharge cycling test according to the foregoing method, and a discharge capacity of each cycle was recorded. Capacity retention rate (%) of secondary battery after 600 cycles at 25°C = discharge capacity after 600 cycles/discharge capacity of first cycle × 100%

### (2) High-temperature cycling performance test for secondary battery

At 45°C, the secondary battery was charged to 4.3 V at a constant current of 1C and charged to a current of 0.05C at a constant voltage. At this point, the secondary battery was fully charged, and a charge capacity at this point was recorded as a charge capacity of the first cycle. The secondary battery was left standing for 5 min and discharged to 2.8 V at a constant current of 1C. This was a charge and discharge cycle, and a discharge capacity at this moment was recorded as a discharge capacity of the first cycle. The secondary battery was subjected to the charge and discharge cycling test according to the foregoing method, and a discharge capacity of each cycle was recorded. Capacity retention rate (%) of secondary battery after 600 cycles at 45°C = discharge capacity after 600 cycles/discharge capacity of first cycle × 100%

### (3) Initial direct current internal resistance test for secondary battery

At 25°C, the secondary battery was charged to 4.3 V at a constant current of 1C, and charged to a current of 0.05C at a constant voltage. At this point, the secondary battery was fully charged. The secondary battery was discharged at a constant current of 0.5C and adjusted to 50% SOC. At this point, the voltage of the secondary battery was recorded as U₁. The secondary battery was discharged for 30 seconds at a constant current I₁ of 4C, and sampling was carried out every 0.1 seconds. The voltage at the end of discharge was recorded as U₂. The initial discharge direct current internal resistance of the secondary battery at 50% SOC was used to represent the initial direct current internal resistance of the secondary battery. The initial direct current internal resistance (mΩ) of the secondary battery was (U₁ - U₂)/I₁.

### (4) Low-temperature performance test for secondary battery

At -10°C, the secondary battery was charged to 4.3 V at a constant current of 0.2C and charged to a current of 0.05C at a constant voltage. At this point, the secondary battery was fully charged, and a charge capacity at this point was recorded as a charge capacity of the first cycle. The secondary battery was left standing for 30 min and discharged to 2.8 V at a constant current of 0.2C. This was a charge and discharge cycle, and a discharge capacity at this moment was recorded as a discharge capacity of the first cycle. The secondary battery was subjected to the charge and discharge cycling test according to the foregoing method, and a discharge capacity of each cycle was recorded. Capacity retention rate (%) of secondary battery after 200 cycles at -10°C = discharge capacity after 200 cycles/discharge capacity of first cycle × 100%

**Table 1**

| No. | Positive electrode plate | | Negative electrode plate | | Percentage of each component in electrolyte | | | | | | |
|---|---|---|---|---|---|---|---|---|---|---|---|
| | Porosity A | Compacted density P₁ (g/cm³) | Porosity B | Compacted density P₂ (g/cm³) | First component D1 | Second component D2 | Third component D3 | Fourth component D4 | Fifth component D5 | D3/ D1 | D4/ D1 |
| Comparative Example 1 | 25% | 3.4 | 27% | 1.6 | 0 | 12% | 0 | 0 | 88.00% | / | / |
| Comparative Example 2 | 25% | 3.4 | 27% | 1.6 | 0.03% | 12% | 0 | 0 | 87.97% | / | / |
| Comparative Example 3 | 25% | 3.4 | 27% | 1.6 | 0.50% | 12% | 0 | 0 | 87.50% | / | / |
| Comparative Example 4 | 25% | 3.4 | 20% | 1.6 | 0.10% | 12% | 0 | 0 | 87.90% | / | / |
| Comparative Example 5 | 25% | 3.4 | 33% | 1.6 | 0.10% | 12% | 0 | 0 | 87.90% | / | / |
| Comparative Example 6 | 35% | 3.4 | 27% | 1.6 | 0.10% | 12% | 0 | 0 | 87.90% | / | / |
| Comparative Example 7 | 20% | 3.4 | 27% | 1.6 | 0.10% | 12% | 0 | 0 | 87.90% | / | / |
| Example 1 | 25% | 3.4 | 27% | 1.6 | 0.10% | 12% | 0 | 0 | 87.90% | / | / |
| Example 2 | 25% | 3.4 | 27% | 1.6 | 0.04% | 12% | 0 | 0 | 87.96% | / | / |
| Example 3 | 25% | 3.4 | 27% | 1.6 | 0.05% | 12% | 0 | 0 | 87.95% | / | / |
| Example 4 | 25% | 3.4 | 27% | 1.6 | 0.08% | 12% | 0 | 0 | 87.92% | / | / |
| Example 5 | 25% | 3.4 | 27% | 1.6 | 0.20% | 12% | 0 | 0 | 87.80% | / | / |
| Example 6 | 25% | 3.4 | 27% | 1.6 | 0.30% | 12% | 0 | 0 | 87.70% | / | / |
| Example 7 | 25% | 3.4 | 27% | 1.6 | 0.40% | 12% | 0 | 0 | 87.60% | / | / |
| Example 8 | 25% | 3.4 | 22% | 1.6 | 0.10% | 12% | 0 | 0 | 87.90% | / | / |
| Example 9 | 25% | 3.4 | 24% | 1.6 | 0.10% | 12% | 0 | 0 | 87.90% | / | / |
| Example 10 | 25% | 3.4 | 30% | 1.6 | 0.10% | 12% | 0 | 0 | 87.90% | / | / |
| Example 11 | 32% | 3.4 | 27% | 1.6 | 0.10% | 12% | 0 | 0 | 87.90% | / | / |
| Example 12 | 30% | 3.4 | 27% | 1.6 | 0.10% | 12% | 0 | 0 | 87.90% | / | / |
| Example 13 | 22% | 3.4 | 27% | 1.6 | 0.10% | 12% | 0 | 0 | 87.90% | / | / |
| Example 14 | 25% | 3.4 | 27% | 1.6 | 0.10% | 12% | 0.02% | 2% | 85.88% | 0.2 | 20 |
| Example 15 | 25% | 3.4 | 27% | 1.6 | 0.10% | 12% | 0.05% | 2% | 85.85% | 0.5 | 20 |
| Example 16 | 25% | 3.4 | 27% | 1.6 | 0.10% | 12% | 0.10% | 2% | 85.80% | 1 | 20 |
| Example 17 | 25% | 3.4 | 27% | 1.6 | 0.10% | 12% | 0.20% | 2% | 85.70% | 2 | 20 |
| Example 18 | 25% | 3.4 | 27% | 1.6 | 0.10% | 12% | 0.50% | 2% | 85.40% | 5 | 20 |
| Example 19 | 25% | 3.4 | 27% | 1.6 | 0.10% | 12% | 0.10% | 0.20% | 87.60% | 1 | 2 |
| Example 20 | 25% | 3.4 | 27% | 1.6 | 0.10% | 12% | 0.10% | 0.50% | 87.30% | 1 | 5 |
| Example 21 | 25% | 3.4 | 27% | 1.6 | 0.10% | 12% | 0.10% | 1% | 86.80% | 1 | 10 |
| Example 22 | 25% | 3.4 | 27% | 1.6 | 0.10% | 12% | 0.10% | 5% | 82.80% | 1 | 50 |

**Table 2**

| No. | A/B | 100D1/B | 100D1/A | P₁/P₂ | 10000D1/ P₁ | 10000D1/ P₂ | Capacity retention rate after 600 cycles at 25°C | Capacity retention rate after 600 cycles at 45°C | Initial direct current internal resistance (mΩ) | Capacity retention rate after 200 cycles at -10°C |
|---|---|---|---|---|---|---|---|---|---|---|
| Comparative Example 1 | 0.93 | 0.00 | 0.00 | 2.13 | 0.00 | 0.00 | 83.3% | 72.0% | 20.7 | 75.5% |
| Comparative Example 2 | 0.93 | 0.11 | 0.12 | 2.13 | 0.88 | 1.88 | 84.6% | 74.2% | 18.5 | 77.9% |
| Comparative Example 3 | 0.93 | 1.85 | 2.00 | 2.13 | 14.71 | 31.25 | 87.4% | 77.3% | 18.9 | 80.1% |
| Comparative Example 4 | 1.25 | 0.50 | 0.40 | 2.13 | 2.94 | 6.25 | 86.4% | 76.3% | 19.2 | 79.7% |
| Comparative Example 5 | 0.76 | 0.30 | 0.40 | 2.13 | 2.94 | 6.25 | 85.5% | 74.4% | 20.3 | 76.3% |
| Comparative Example 6 | 1.30 | 0.37 | 0.29 | 2.13 | 2.94 | 6.25 | 85.4% | 75.5% | 20.2 | 78.5% |
| Comparative Example 7 | 0.74 | 0.37 | 0.50 | 2.13 | 2.94 | 6.25 | 86.6% | 74.4% | 21.7 | 77.5% |
| Example 1 | 0.93 | 0.37 | 0.40 | 2.13 | 2.94 | 6.25 | 95.5% | 86.9% | 16.9 | 85.4% |
| Example 2 | 0.93 | 0.15 | 0.16 | 2.13 | 1.18 | 2.50 | 90.1% | 80.3% | 18.0 | 82.4% |
| Example 3 | 0.93 | 0.19 | 0.20 | 2.13 | 1.47 | 3.13 | 92.4% | 82.4% | 17.3 | 83.3% |
| Example 4 | 0.93 | 0.30 | 0.32 | 2.13 | 2.35 | 5.00 | 94.1% | 84.1% | 17.1 | 83.8% |
| Example 5 | 0.93 | 0.74 | 0.80 | 2.13 | 5.88 | 12.50 | 94.5% | 85.2% | 17.5 | 84.4% |
| Example 6 | 0.93 | 1.11 | 1.20 | 2.13 | 8.82 | 18.75 | 93.9% | 84.7% | 17.9 | 83.7% |
| Example 7 | 0.93 | 1.48 | 1.60 | 2.13 | 11.76 | 25.00 | 91.9% | 83.2% | 18.2 | 82.1% |
| Comparative Example 3 | 0.93 | 1.85 | 2.00 | 2.13 | 14.71 | 31.25 | 87.4% | 77.3% | 18.9 | 80.1% |
| Example 8 | 1.14 | 0.45 | 0.40 | 2.13 | 2.94 | 6.25 | 94.3% | 85.3% | 17.5 | 84.3% |
| Example 9 | 1.04 | 0.42 | 0.40 | 2.13 | 2.94 | 6.25 | 94.5% | 85.9% | 17.3 | 84.9% |
| Example 10 | 0.83 | 0.33 | 0.40 | 2.13 | 2.94 | 6.25 | 93.5% | 84.6% | 17.5 | 83.6% |
| Example 11 | 1.19 | 0.37 | 0.31 | 2.13 | 2.94 | 6.25 | 94.5% | 85.5% | 17.9 | 83.3% |
| Example 12 | 1.11 | 0.37 | 0.33 | 2.13 | 2.94 | 6.25 | 95.1% | 85.9% | 17.7 | 84.4% |
| Example 13 | 0.81 | 0.37 | 0.45 | 2.13 | 2.94 | 6.25 | 93.7% | 84.9% | 18.3 | 84.3% |
| Example 14 | 0.93 | 0.37 | 0.40 | 2.13 | 2.94 | 6.25 | 95.7% | 86.9% | 16.7 | 85.7% |
| Example 15 | 0.93 | 0.37 | 0.40 | 2.13 | 2.94 | 6.25 | 95.9% | 87.1% | 16.5 | 86.1% |
| Example 16 | 0.93 | 0.37 | 0.40 | 2.13 | 2.94 | 6.25 | 96.1% | 87.3% | 16.3 | 86.4% |
| Example 17 | 0.93 | 0.37 | 0.40 | 2.13 | 2.94 | 6.25 | 96.3% | 87.7% | 16.1 | 86.9% |
| Example 18 | 0.93 | 0.37 | 0.40 | 2.13 | 2.94 | 6.25 | 94.7% | 85.9% | 17.4 | 83.9% |
| Example 19 | 0.93 | 0.37 | 0.40 | 2.13 | 2.94 | 6.25 | 94.8% | 86.4% | 16.9 | 86.5% |
| Example 20 | 0.93 | 0.37 | 0.40 | 2.13 | 2.94 | 6.25 | 96.3% | 88.1% | 16.7 | 86.9% |
| Example 21 | 0.93 | 0.37 | 0.40 | 2.13 | 2.94 | 6.25 | 96.7% | 88.3% | 16.4 | 87.2% |
| Example 22 | 0.93 | 0.37 | 0.40 | 2.13 | 2.94 | 6.25 | 95.6% | 86.9% | 16.1 | 85.9% |

It can be learned from the test results in Table 2 that when the secondary battery satisfies both 0.80 ≤ A/B ≤ 1.20 and 0.14 ≤ 100D1/B ≤ 1.50, the secondary battery exhibits low internal resistance and high capacity retention rate, and therefore, can have good power performance and long cycle life while maintaining high energy density. In addition, the secondary battery can have good low-temperature discharge performance.

The secondary batteries in Comparative Example 2 and Comparative Example 3 do not satisfy 0.14 ≤ 100D1/B ≤ 1.50, and the secondary batteries in Comparative Examples 4 to 7 do not satisfy 0.80 ≤ A/B ≤ 1.20. Therefore, none of these secondary batteries can have good power performance, good low-temperature discharge performance, and long cycle life while maintaining high energy density.

It can be further learned from the test results of Examples 1 to 13 that the secondary battery further satisfying 0.85 ≤ A/B ≤ 1.15 and/or 0.16 ≤ 100D1/B ≤ 1.40 helps to further enhance the comprehensive performance of the secondary battery.

It can be further learned from the test results of Examples 1 to 6 and Example 7 that the secondary battery further satisfying at least one of 0.16 ≤ 100D1/A ≤ 1.20, 1.43 ≤ 10000D1/P₁ ≤ 9.34, and 2.78 ≤ 10000D1/P₂ ≤ 21.40, particularly, the secondary battery satisfying all of 0.16 ≤ 100D1/A ≤ 1.20, 1.43 ≤ 10000D1/P₁ ≤ 9.34, and 2.78 ≤ 10000D1/P₂ ≤ 21.40 helps to further improve the comprehensive performance of the secondary battery.

It can be further learned from the test results of Example 1 and Examples 14 to 22 that the electrolyte further containing a proper amount of the third component and/or fourth component helps to further improve at least one of the cycling performance, power performance, and low-temperature discharge performance of the secondary battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A secondary battery comprising a positive electrode plate, a negative electrode plate, and an electrolyte, wherein porosity of the positive electrode plate is A, porosity of the negative electrode plate is B, and the electrolyte comprises a first component, wherein the first component comprises one or more compounds represented by formula 1, R₁ and R₂ each independently representfluorine atom or at least one from a group consisting of the following partially or fully fluorinated groups: C1-C10 alkyl group, C2-C10 alkenyl group, C2-C10 alkynyl group, C6-C8 aryl group, C1-C10 alkoxy group, C2-C10 alkenyloxy group, C2-C10 alkynyloxy group, and C6-C8 aryloxy group, Me comprises one or more of alkali metals and alkaline earth metals, and a weight percentage of the first component in the electrolyte is D1, 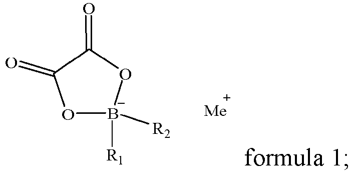 and
the secondary battery satisfies 0.80 ≤ A/B ≤ 1.20 and 0.14 ≤ 100D1/B ≤ 1.50.

2. The secondary battery according to claim 1, wherein
0.85 ≤ A/B ≤ 1.15, optionally 0.90 ≤ A/B ≤ 1.15; and/or
0.16 ≤ 100D1/B ≤ 1.40, optionally 0.20 ≤ 100D1/B ≤ 1.20.

3. The secondary battery according to claim 1 or 2, wherein the secondary battery further satisfies 0.16 ≤ 100D1/A ≤ 1.20, optionally 0.20 ≤ 100D1/A ≤ 1.10.

4. The secondary battery according to any one of claims 1 to 3, wherein
18% ≤ A ≤ 32%;
20% ≤ B ≤ 35%; and/or
0.05% ≤ D1 ≤ 0.3%.

5. The secondary battery according to any one of claims 1 to 4, wherein compacted density of the positive electrode plate is P₁ g/cm³, compacted density of the negative electrode plate is P₂ g/cm³, and the secondary battery further satisfies the following relation: 1.75 ≤ P₁/P₂ ≤ 2.50, optionally 2.00 ≤ P₁/P₂ ≤ 2.40.

6. The secondary battery according to any one of claims 1 to 5, wherein compacted density of the positive electrode plate is P₁ g/cm³ and the secondary battery further satisfies the following relation: 1.43 ≤ 10000D1/P₁ ≤ 9.34, optionally 2.00 ≤ 10000D1/P₁ ≤ 8.00.

7. The secondary battery according to any one of claims 1 to 6, wherein compacted density of the negative electrode plate is P₂ g/cm³ and the secondary battery further satisfies the following relation: 2.78 ≤ 10000D1/P₂ ≤ 21.40, optionally 5.00 ≤ 10000D1/P₂ ≤ 15.00.

8. The secondary battery according to any one of claims 5 to 7, wherein
2.8 ≤ P₁ ≤ 3.65, optionally 3.2 ≤ P₁ ≤ 3.5; and/or
1.2 ≤ P₂ ≤ 1.85, optionally 1.4 ≤ P₂ ≤ 1.8.

9. The secondary battery according to any one of claims 1 to 8, wherein
Me represents Li; and/or
the compound represented by formula 1 comprises one or more of the following compounds:

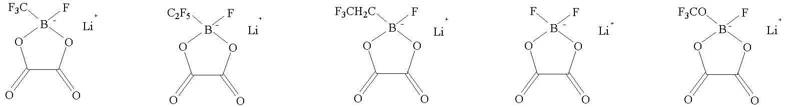

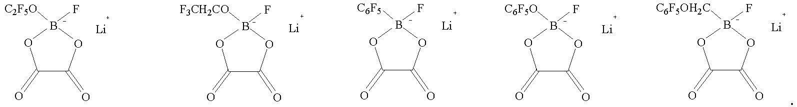

10. The secondary battery according to any one of claims 1 to 9, wherein the electrolyte further comprises a second component, the second component comprises lithium hexafluorophosphate, and optionally, a weight percentage D2 of the second component in the electrolyte is 5% or more, optionally 8% or more.

11. The secondary battery according to any one of claims 1 to 10, wherein the electrolyte further comprises a third component, and the third component comprises one or more of lithium tetrafluoroborate, lithium difluorophosphate, lithium perchlorate, lithium hexafluoroarsenate, lithium difluorobis(oxalato)phosphate, and lithium tetrafluoro oxalato phosphate and optionally comprises lithium tetrafluoroborate, lithium difluorophosphate, or a combination thereof;
optionally, a weight percentage D3 of the third component in the electrolyte is 0.5% or less, more optionally 0.25% or less; and
optionally, a weight ratio D3/D1 of the third component to the first component is 0.5 to 2.

12. The secondary battery according to any one of claims 1 to 11, wherein the electrolyte further comprises a fourth component, and the fourth component comprises fluoroethylene carbonate;
optionally, a weight percentage D4 of the fourth component in the electrolyte is 5% or less, more optionally 2.5% or less; and
optionally, a weight ratio D4/D 1 of the fourth component to the first component is 5 to 100.

13. The secondary battery according to any one of claims 1 to 12, wherein the electrolyte further comprises a fifth component, the fifth component comprises one or more of cyclic carbonate compound, linear carbonate compound, carboxylate compound, sulfone compound, and ether compound and optionally comprises a cyclic carbonate compound and a linear carbonate compound, and optionally, a weight percentage D5 of the fifth component in the electrolyte is 60% or more, optionally 75% or more.

14. The secondary battery according to any one of claims 1 to 13, wherein the positive electrode plate comprises a positive electrode current collector and a positive electrode film layer disposed on at least one surface of the positive electrode current collector and comprising a positive electrode active material; and
optionally, the positive electrode active material comprises one or more of layered lithium transition metal oxide, lithium-containing phosphate, and their respective modified compounds, and optionally comprises one or more of layered lithium transition metal oxide and modified compound thereof or comprises a mixture of layered lithium transition metal oxide and modified compound thereof and lithium-containing phosphate and modified compound thereof.

15. The secondary battery according to claim 14, wherein the positive electrode active material satisfies at least one of the following:
(1) morphology of the positive electrode active material comprises one or more of sphere and quasi-sphere;
(2) the positive electrode active material comprises primary particles, secondary particles, or a combination thereof and optionally comprises secondary particles or a combination of primary particles and secondary particles;
(3) a number percentage of the secondary particles in the positive electrode active material is 50% or more;
(4) volume-based median particle size of the positive electrode active material satisfies 2.5 µm ≤ Dᵥ50 ≤ 30 µm, optionally 2.5 µm ≤ Dᵥ50 ≤ 25 µm; and
(5) span of the positive electrode active material satisfies 1 ≤ (Dᵥ90 - Dᵥ10)/Dᵥ50 ≤ 5, optionally 1 ≤ (Dᵥ90 - Dᵥ10)/Dᵥ50 ≤ 2.

16. The secondary battery according to any one of claims 1 to 15, wherein the negative electrode plate comprises a negative electrode current collector and a negative electrode film layer disposed on at least one surface of the negative electrode current collector and comprising a negative electrode active material; and
optionally, the negative electrode active material comprises one or more of carbon-based material, silicon-based material, tin-based material, lithium titanate, and composite material obtained by coating and modifying these materials and more optionally comprises one or more of carbon-based material and composite material obtained by coating and modifying this material, and optionally, the carbon-based material comprises one or more of graphite, soft carbon, hard carbon, and composite material obtained by coating and modifying these materials.

17. The secondary battery according to claim 16, wherein the negative electrode active material satisfies at least one of the following:
(1) morphology of the negative electrode active material comprises one or more of sphere, quasi-sphere, block, and sheet;
(2) the negative electrode active material comprises primary particles, secondary particles, or a combination thereof and optionally comprises secondary particles or a combination of primary particles and secondary particles;
(3) a number percentage of the secondary particles in the negative electrode active material is 50% or more;
(4) volume-based median particle size of the negative electrode active material satisfies 8 µm ≤ Dᵥ50 ≤ 22 µm, optionally 10 µm ≤ Dᵥ50 ≤ 16 µm; and
(5) span of the negative electrode active material satisfies 0.5 ≤ (Dᵥ90 - Dᵥ10)/Dᵥ50 ≤ 5, optionally 0.5 ≤ (Dᵥ90 - Dᵥ10)/Dᵥ50 ≤ 1.5.

18. An electric apparatus, comprising the secondary battery according to any one of claims 1 to 17.
